# EUROPÄISCHE PATENTSCHRIFT

(11) **EP 3 237 249 B1**
(45) Veröffentlichungstag und Bekanntmachung des Hinweises auf die Patenterteilung: **22.04.2020**
(21) Anmeldenummer: 15826022.4
(22) Anmeldetag: 18.12.2015
(51) Int. Cl.: G06F 3/041, G06F 3/0482, G06F 3/0354, B60K 37/06, G06F 3/0488, G06F 3/0484, G06F 3/14

(54) **FORTBEWEGUNGSMITTEL, ANWENDERSCHNITTSTELLE UND VERFAHREN ZUR ÜBERGREIFENDEN ANZEIGE EINES ANZEIGEINHALTES AUF ZWEI ANZEIGEEINRICHTUNGEN**
TRANSPORTATION MEANS, USER INTERFACE AND METHOD FOR OVERLAPPING THE DISPLAY OF DISPLAY CONTENTS OVER TWO DISPLAY DEVICES
MOYEN DE DÉPLACEMENT, INTERFACE UTILISATEUR ET PROCÉDÉ D'AFFICHAGE À RECOUVREMENT D'UN CONTENU D'AFFICHAGE SUR DEUX DISPOSITIFS D'AFFICHAGE

(30) Priorität: 22.12.2014 DE 102014226760; 02.01.2015 EP 15150029
(43) Veröffentlichungstag der Anmeldung: 01.11.2017
(73) Patentinhaber: Volkswagen Aktiengesellschaft, 38440 Wolfsburg (DE)
(72) Erfinder: WILD, Holger, 10179 Berlin (DE); KÖTTER, Nils, 38118 Braunschweig (DE)
(74) Vertreter: Hoefer & Partner Patentanwälte mbB
(86) Internationale Anmeldenummer: PCT/EP2015/080522
(87) Internationale Veröffentlichungsnummer: WO 2016/102376

(56) Entgegenhaltungen:
- EP-A1- 3 040 849
- EP-A2- 2 261 793
- EP-A2- 2 261 793
- EP-A2- 2 455 843
- WO-A1-2010/042101
- WO-A1-2010/042101
- DE-A1-102012 022 312
- DE-A1-102012 022 312
- FR-A1- 2 971 878
- FR-A1- 2 971 878

## Beschreibung

### Stand der Technik

Die vorliegende Offenbarung betrifft ein Fortbewegungsmittel, ein Infotainmentsystem sowie eine Vorrichtung zur Bedienung eines Infotainmentsystems eines Fortbewegungsmittels. Insbesondere betrifft die vorliegende Offenbarung eine Möglichkeit zur Eingabe stufenloser Eingabewerte mittels Wischgesten, ohne dass der Anwender zur Vornahme gezielter Eingaben seinen Blick auf die Anwenderschnittstelle richten muss.

Der Trend in den Cockpits aktueller Fortbewegungsmittel, insbesondere Kraftfahrzeuge, geht derzeit zu einem schalterlosen Design. Da hierbei auch auf herkömmliche Dreh-Drück-Steller verzichtet werden soll, wodurch kein wesentliches haptisches Feedback auf Anwendereingaben folgt, besteht der Bedarf an einer Anwenderschnittstelle und einem Eingabeelement, welches sich gut in die Optik eines schalterlosen Cockpits integriert und dem Kunden dennoch eine gute Orientierung sowie eine optische Rückmeldung beim Einstellen wichtiger Funktionen (wie z.B. Audio-Lautstärke, Scrollen in langen Listen, Klimabedienung, etc.) gibt.

DE 10 2012 008 681 A1 offenbart eine Multifunktionsbedieneinrichtung für ein Kraftfahrzeug, bei welchem eine kombinierte Slider-/Tastfläche zur Entgegennahme von Wischgesten und Druckeingaben vorgesehen ist. Das Bedienelement ist länglich oder rechteckig ausgeführt, wobei ein erhabener Randvorsprung einer Führung des Fingers des Anwenders dient. Vorzugsweise ist das Bedienelement seitlich der Bildschirmanzeige im Wesentlichen vertikal angeordnet.

DE 10 2013 000 110 A1 offenbart ein Bedienverfahren und ein Bediensystem in einem Fahrzeug, bei welchem im Ansprechen auf eine Berührung einer berührungsempfindlichen Oberfläche auf einer zweiten Anzeigefläche auf einer ersten Anzeigefläche angezeigte Schaltflächen derart verändert werden, dass auf der ersten Anzeigefläche zu der Schaltfläche gehörige Zusatzinformationen angezeigt werden. Hierzu wird eine berührungsempfindliche Oberfläche für eine kapazitive Wechselwirkung mit einem Betätigungsobjekt (z.B. ein kapazitiver Touch-Screen) vorgesehen.

DE 10 2008 048 825 A1 offenbart ein Anzeige- und Bediensystem in einem Kraftfahrzeug mit benutzeradaptiver Darstellung, wobei über eine Nutzereingabe ein Modifiziermodus aktivierbar ist, in dem eine grafische Darstellung aller Anzeigeobjekte zumindest teilweise in einem Teilbereich der Anzeigefläche erfolgt. Auf diese Weise können zuvor über eine gesamte Anzeigefläche verteilte Objekte in einem solchen Teilbereich angezeigt werden, welcher in einem Greifraum eines Anwenders befindlich ist.

Ausgehend vom vorstehend zitierten Stand der Technik ist es eine Aufgabe der vorliegenden Offenbarung, eine komfortable Eingabeeinrichtung für Wischgesten optisch vorteilhaft in das Interieur eines Fortbewegungsmittels zu integrieren. Es ist eine weitere Aufgabe der vorliegenden Offenbarung, Rückmeldungen an einen Anwender eines solchen Systems intuitiv verständlich zu gestalten.

Die vorstehend identifizierte Aufgabe wird durch eine Vorrichtung zur Bedienung eines Infotainmentsystems eines Fortbewegungsmittels gelöst. Die Vorrichtung umfasst eine linien- oder kurvenförmig erstreckte Fingerleiste, welche zur haptischen (Längs-)Führung eines Fingers eines Anwenders eingerichtet ist. Mit anderen Worten wird eine eindimensionale Spur für den Finger des Anwenders vorgegeben. Eine solche Spur weist quer zu ihrer Längsrichtung insbesondere eine konkave und/oder eine konvexe (Teil-)Struktur auf, welche im Zuge einer Wischgeste von einem Anwender haptisch erfasst und zur Orientierung des Fingers auf der Fingerleiste verwendet werden kann. Zudem ist eine Erfassungseinheit zur Erfassung auf der Fingerleiste ausgeführter Wischgesten vorgesehen. Die Erfassungseinheit kann (beispielsweise kapazitiv) eine auf der Fingerleiste ausgeführte Bewegung menschlichen Gewebes erfassen und in elektrische Signale wandeln. Eine Auswerteeinheit ist zur Verarbeitung erfasster Wischgesten (bzw. durch diese erzeugter Signale) vorgesehen und kann in Form eines programmierbaren Prozessors, eines Mikrocontrollers, eines Nanocontrollers, o.ä., ausgeführt sein. Zudem weist die Vorrichtung einen linienförmigen Lichtauslass auf, welcher sich zumindest annähernd vollständig entlang der Fingerleiste erstreckt. Der Lichtauslass kann ein teilweise transparenter Kunststoff und/Glaskörper und/oder Sinterkörper sein, durch welchen ein hinter ihm liegendes Leuchtmittel Licht in Richtung des Anwenders ausschütten kann. Im Ansprechen auf eine mittels der Erfassungseinheit detektierte Anwendergeste kann die Vorrichtung die Anwendergeste mittels eines aus dem Lichtauslass emittierten Lichtsignals quittieren. Beispielsweise kann eine gestartete Funktion durch ein der Funktion zugeordnetes Lichtmuster quittiert werden. Das Lichtmuster kann auch eine oder mehrere Farben aufweisen, welche der jeweils gestarteten Funktion eindeutig zugeordnet sind. Auch unabhängig von einem erfolgreichen Start einer der Geste zugeordneten Funktion kann die Betätigung der Vorrichtung durch eine Ausgabe eines entsprechenden Lichtsignals quittiert werden. Insbesondere im Falle einer Wischgeste kann ein Schimmer (auch "Glow" oder "Corona") um den oder die Finger erzeugt werden, der sich mit dem Finger bewegt, wodurch der Anwender darüber in Kenntnis gesetzt wird, in welcher Weise die Vorrichtung seine Geste erfasst hat. Als Anwendergeste kann auch bereits ein Annähern bzw. ein Auflegen eines Fingers oder mehrerer Finger verstanden werden, wobei ein Lauflicht oder mehrere Lauflichter den Lichtauslass (z.B. startend an dessen Rand oder an dessen Rändern) entlang in Richtung des Fingers oder der Finger erzeugt wird, so dass auch ungeübte Anwender ein intuitiv verständliches Signal darüber erhalten, dass sie soeben eine Eingabeschnittstelle gefunden bzw. verwendet haben.

Die Fingerleiste kann beispielsweise zur horizontalen Anordnung vorgesehen sein. Dies hat den Vorteil, dass in vertikaler Richtung ein Sims bzw. eine Auflage für einen Finger ausgebildet wird, wodurch in vertikaler Richtung entstehende Beschleunigungen (z.B. beim Durchfahren einer Bodenwelle oder eines Schlaglochs) den Finger des Anwenders nicht aus einem beabsichtigten Raumbereich vor der Fingerleiste bewegen. Besonders intuitiv wird die Bedienung der Vorrichtung, wenn die Fingerleiste oberhalb und/oder unterhalb einer Anzeigefläche in einem Fortbewegungsmittel angeordnet wird. Auf diese Weise steht die Vorrichtung bzw. die Fingerleiste in einem starken Kontext der Anzeigeflächen und wird intuitiv als Bestandteil einer Anwenderschnittstelle verstanden. Eine besonders angenehme und selbsterklärende Haptik ergibt sich bei Ausgestaltung der Fingerleiste in Form einer rinnen- oder muldenförmigen Längsnut, welche beispielsweise einer Oberfläche eines (ebenen oder gewölbten) Bildschirms folgt.

Bevorzugt ist der Lichtauslass in die Fingerleiste eingelassen, wodurch das emittierte Lichtsignal besonders stark mit der Anwendergeste assoziiert wird. Mit anderen Worten wird bei einer Bedienung der Fingerleiste auch der Lichtauslass überstrichen, so dass das quittierende Lichtsignal in unmittelbarer Nähe und insbesondere auch unter dem jeweiligen Finger des Anwenders angeordnet zu sein scheint.

Eine geeignete Möglichkeit zur Realisierung der quittierenden Lichtsignale besteht darin, hinter dem Lichtauslass eine Lichtquelle anzuordnen, welche einzelne Leuchtmittel (z.B. lichtimitierende Dioden, LEDs) umfasst, welche eine besonders schnelle Ansprechgeschwindigkeit bezüglich sie ansteuernder elektrischer Signale aufweisen. Dies ermöglicht eine besonders präzise Ausgabe, die Anwendergeste quittierender Lichtsignale. Insbesondere kann ein transluzentes (umgangssprachlich auch "milchig") Element zur Homogenisierung vom Lichtauslass ausgeschütteten Lichtes vorgesehen sein. Auf diese Weise sorgt das transluzente Element für eine Diffusion des eingestrahlten Lichtes in Richtung des Anwenders, wodurch einerseits die inhomogene Lichtquelle optisch attraktiver in Erscheinung tritt und dennoch eine präzise Positionierung des Lichtsignals möglich ist.

Die Vielfalt möglicher Eingaben wird dem Anwender besonders ersichtlich, wenn die Fingerleiste beidseitig durch optisch und/oder haptisch abgegrenzte Endbereiche zur Ausbildung von Tastenfeldern begrenzt ist. Beispielsweise können Stege quer zur Längserstreckung der Fingerleiste vorgesehen sein, welche der Anwender deutlich fühlen kann. Alternativ oder zusätzlich können quer zur Längsrichtung der Fingerleiste erstreckte Nuten vorgesehen sein, einen Wischbereich zwischen den Endbereichen optisch und haptisch gegenüber den Tastenfeldern abzugrenzen. Auch eine Bedienung der Tastenfelder kann auf diese Weise im Wesentlichen ohne ein optisches Erfassen der Vorrichtung durch den Anwender erfolgen. Dies erhöht die Verkehrssicherheit während der Bedienung der Vorrichtung. Beispielsweise können wiederholende Tipp-Eingaben bezüglich eines der Tastenfelder verwendet werden, um eine dem Wischbereich zugeordnete Funktion zu wechseln (englisch: "toggling"). Mögliche Funktionen, welche mittels der Tastenfelder "durchgeschaltet" werden können, werden im weiteren Verlauf der vorliegenden Beschreibung erläutert. Beispielsweise kann eine für den Wischbereich gewählte Funktion mittels einer Langdruck (englisch: "longpress")-Geste auch für zukünftige Bedienschritte dem Wischbereich zugeordnet werden. Auf diese Weise kann eine dauerhafte Zuordnung einer vom Anwender gewünschten Funktion zum Wischbereich erfolgen.

Der Lichtauslass kann bevorzugt eingerichtet sein, im Bereich der Tastenfelder unabhängig von einer aktuellen Lichtfarbe in sämtlichen anderen Bereichen der Fingerleiste eine vordefinierte andere Lichtfarbe auszugeben. Entsprechendes gilt für eine Lichtintensität. Mit anderen Worten sind die Bereiche des Lichtauslasses in den Endbereichen bevorzugt optisch undurchlässig gegenüber dem Wischgestenbereich der Fingerleiste abgegrenzt. Beispielsweise können drei transluzente Komponenten des Lichtauslasses im Bereich der optischen und/oder haptischen Abgrenzung durch zwei opake (also optisch "undurchlässige") Strukturen unterbrochen werden. Beispielsweise können diese optischen Unterbrechungen aus einer Oberfläche der Fingerleiste derart hervorstehen, dass sie für eine haptische Begrenzung der Endbereiche sorgen. Bevorzugt wird ein optisches Übersprechen von Licht zumindest vermieden, indem die opaken Strukturen in Richtung des Anwenders nicht von transluzenten Elementen überlagert sind. Eine besonders homogene Oberfläche kann indes erreicht werden, indem ein vollständig transparentes Element die Oberfläche der Fingerleiste bildet.

Die Erfassungseinheit kann eine lineare Anordnung einer Vielzahl kapazitiver Antennen aufweisen, welche in Haupterstreckungsrichtung (Längsrichtung) der Fingerleiste in einem Bereich hinter der Fingerleiste nebeneinander angeordnet sind. Mit anderen Worten folgen die einzelnen kapazitiven Antennen der Linienform der Fingerleiste, so dass besonders viele unterschiedliche Eingabepositionen auf der Fingerleiste von der Erfassungseinheit aufgelöst und der Auswerteeinheit gemeldet werden können. Gegenüber kapazitiven Oberflächen berührungsempfindlicher Bildschirme bieten die einzelnen kapazitiven Antennen den Vorteil einer flexibleren Auslegbarkeit hinsichtlich Empfindlichkeit und Reichweite. Beispielsweise kann die Erfassungseinheit nicht lediglich Berührungen, sondern auch Annäherungen eines Anwenders ohne Kontakt mit der Fingerleiste erfassen und der Auswerteeinheit melden.

Beispielsweise kann die Vorrichtung eine Anzeigeeinheit mit einer berührungsempfindlichen Oberfläche und eine linien- oder kurvenförmig erstreckte haptische Barriere auf der Anzeigeeinheit aufweisen. Die Barriere dient zur Abgrenzung einer Anzeigefläche der Anzeigeeinheit gegenüber einem zur Ausgestaltung einer Fingerleiste vorgesehenen Randbereich der Anzeigeeinheit. Ein im Bereich der Fingerleiste angeordnetes Segment der berührungsempfindlichen Oberfläche der Anzeigeeinheit dient also als Erfassungseinheit zur Erfassung von Druck-/Tipp- und Wischgesten eines Anwenders. Entsprechend kann ein im Bereich der Fingerleiste angeordnetes Segment der Anzeigeeinheit den Lichtauslass der Vorrichtung bilden. Mit anderen Worten ist der Lichtauslass als linienförmiges Segment einer selbstleuchtenden Anzeigeeinheit ausgestaltet. Durch die haptische Barriere kann die Anzeigeeinheit einerseits die Anzeigefläche und andererseits die Erfassungseinheit und den Lichtauslass der Vorrichtung bereitstellen, obwohl die Anzeigeeinheit als einstückiges Element gefertigt werden kann. Dies erhöht die Stabilität der Vorrichtung, senkt die Bauteilanzahl, erübrigt Montagevorgänge und senkt Kosten für die Produktion. Überdies vermeiden einstückige Komponenten im Fahrzeugbau Probleme des Knarzens, Klapperns und unerwünschten Schmutzeintrages, wodurch Fehlfunktionen vorgebeugt wird.

Bevorzugt kann weiter eine Annäherungssensorik vorgesehen sein, wobei die Auswerteeinheit eingerichtet ist, eine mittels der Annäherungssensorik erfasste Geste mittels eines aus dem Lichtauslass emittierten Lichtsignals zu quittieren. Mit anderen Worten wird nicht erst eine berührende Interaktion des Anwenders mit der Fingerleiste quittiert, sondern ein Lichtsignal bereits im Ansprechen auf eine Annäherung des Anwenders an die Fingerleiste ausgegeben, um den Anwender darüber in Kenntnis zu setzen, dass die Möglichkeit einer berührenden Eingabe mit der en Vorrichtung besteht und wie eine solche Interaktion aussehen könnte. Dies kann beispielsweise durch Lichtverläufe und/oder Blinkmuster erfolgen, wodurch der Anwender zur Eingabe von Wisch- bzw. Multitouch-Gesten animiert wird.

Bevorzugt ist die Auswerteeinheit eingerichtet, eine erste vordefinierte Geste auf der Fingerleiste zur Anpassung einer Lautstärke einer Medienwiedergabe auszuwerten. Die erste Geste kann beispielsweise eine Wischgeste mit einem einzelnen Finger sein. Alternativ oder zusätzlich ist die Auswerteeinheit eingerichtet, eine zweite vordefinierte Geste auf der Fingerleiste zur Anpassung einer Lautstärke einer Sprachausgabe des Infotainmentsystems auszuwerten. Die zweite Geste kann beispielsweise eine Wischgeste mit genau zwei Fingern (Mehrfachberührungsgeste, Multitouch-Geste) sein. Alternativ oder zusätzlich kann die Auswerteeinheit eingerichtet sein, eine dritte vordefinierte Geste auf der Fingerleiste zur Anpassung einer Lautstärke von Klangzeichen bzw. akustischen Warntönen auszuwerten. Die dritte Geste kann beispielsweise eine mit genau drei Fingern ausgeführte Multitouch-Wischgeste sein. Eine Zuordnung zwischen den vorstehend genannten Gesten und beispielhaften Funktionsumfängen kann in beliebiger Weise abgeändert werden, ohne den Bereich der vorliegenden Offenbarung zu verlassen.

Je nach dem, welche Art von Geste bzw. welche Art durch die Geste gestarteter Funktion vorliegt, kann ein jeweiliger Hinweistext und/oder ein jeweiliges Hinweissymbol auf einer Anzeigeeinheit der Vorrichtung ausgegeben werden.

Alternativ oder zusätzlich kann ein über den Lichtauslass ausgegebenes Lichtsignal die Funktion und die Art der erfassten Geste unabhängig voneinander quittieren. Beispielsweise kann die Art der Geste durch eine Position bzw. mehrere Positionen erhöhter Lichtintensität veranschaulicht bzw. quittiert werden. Durch die Verwendung unterschiedlicher Farben können die bedienten Funktionen veranschaulicht werden. Beispielsweise kann bei einer Wischgestenbedienung einer Klimafunktion das Lichtsignal in Abhängigkeit einer Verringerung oder Erhöhung einer Solltemperatur in Richtung blau bzw. in Richtung rot verändert werden. Sofern die Funktion eine Lautstärkeveränderung ist, kann von einem weißen Licht in Richtung roten Lichts gewechselt werden, wenn die Lautstärke erhöht wird bzw. anders herum von einer roten Lichtfarbe zu weißem Licht gewechselt werden, wenn die Lautstärke verringert wird. Selbstverständlich kann der Lichtauslass annähernd vollständig mit Licht einer ersten Farbe beaufschlagt werden, um die Art und Weise der Funktionsanpassung zu veranschaulichen, während eine zweite Farbe für im Bereich der Finger des Anwenders ausgeschütteten Lichts gewählt wird, wodurch die erfasste Geste (z.B. unabhängig von einer angepassten Funktion) quittiert wird.

Die Auswerteeinheit kann weiter eingerichtet sein, im Ansprechen auf ein Verstreichen einer vordefinierten Zeitdauer nach einem Ende einer mittels der Erfassungseinheit erfassten Geste ein aus dem Lichtauslass emittiertes Lichtsignal einer aktuellen Einstellung des Ambientelichtes des Fortbewegungsmittels anzupassen. Mit anderen Worten kann der Lichtauslass sowie das hinter ihm angeordnete Leuchtmittel dazu verwendet werden, ein Ambientelichtkonzept zu unterstützen, sofern die Fingerleiste akut nicht zur Entgegennahme von Anwendergesten bzw. zu deren Quittierung verwendet wird. Die vordefinierte Zeitdauer, nach welcher im Nachgang einer Anwenderinteraktion automatisch zum Ambientelichtmodus umgeschaltet wird, kann beispielsweise eine Mindestzeitdauer in Form ganzzahliger Vielfacher einer Sekunde im Bereich zwischen einer Sekunde und 10 Sekunden sein. Auf diese Weise wird die Vorrichtung noch vielfältiger zur optisch ansprechenden und intuitiv sowie komfortabel zu bedienenden Innenraumgestaltung genutzt.

Gemäß einem zweiten Aspekt der vorliegenden Offenbarung wird ein Infotainmentsystem für ein Fortbewegungsmittel vorgeschlagen, welches eine Vorrichtung gemäß dem erstgenannten Erfindungsaspekt umfasst. Mit anderen Worten ist die Vorrichtung in einer Ausgestaltung um Funktionsumfänge wie beispielsweise eine Musikwiedergabe und/oder eine Navigationsfunktion ergänzt. Entsprechend können auch Heiz-/Klimaumfänge über die Vorrichtung angepasst und veranschaulicht werden. Die Merkmale, Merkmalskombinationen und die sich aus diesen ergebenden Vorteile entsprechen dem erstgenannten Aspekt der vorliegenden Erfindung, so dass zur Vermeidung von Wiederholungen auf die obigen Ausführungen verwiesen wird.

Gemäß einem dritten Aspekt der vorliegenden Offenbarung wird ein Fortbewegungsmittel mit einem Infotainmentsystem entsprechend dem zweitgenannten Erfindungsaspekt oder einer Vorrichtung gemäß dem erstgenannten Erfindungsaspekt vorgeschlagen. Das Fortbewegungsmittel kann beispielsweise ein PKW, ein Transporter, ein LKW, ein Motorrad, ein Luft- und/oder Wasserfahrzeug sein. Auch bezüglich der Merkmale, Merkmalskombinationen und der sich aus diesen ergebenden Vorteile des Fortbewegungsmittels wird zur Vermeidung von Wiederholungen auf die obigen Ausführungen verwiesen.

### Kurze Beschreibung der Zeichnungen

Nachfolgend werden Ausführungsbeispiele der Offenbarung unter Bezugnahme auf die begleitenden Zeichnungen im Detail beschrieben. In den Zeichnungen ist:
- Figur 1: eine schematische Übersicht über Komponenten eines Ausführungsbeispiels eines Fortbewegungsmittels mit einer Vorrichtung;
- Figur 2: eine perspektivische Zeichnung eines Ausführungsbeispiels einer Vorrichtung;
- Figur 3: eine Detailansicht eines Ausschnittes des in Figur 2 gezeigten Ausführungsbeispiels;
- Figur 4: eine Draufsicht auf ein Ausführungsbeispiel einer Erfassungseinheit mit einer Vielzahl kapazitiver Antennen; und
- Figur 5: eine Prinzipskizze, veranschaulichend ein Ausführungsbeispiel einer Vorrichtung, bei welchem eine Anzeigeeinheit mit berührungsempfindlicher Oberfläche eine Anzeigefläche, eine Erfassungseinheit und einen Lichtauslass einer Vorrichtung bereitstellt.

### Gegenstände der Offenbarung

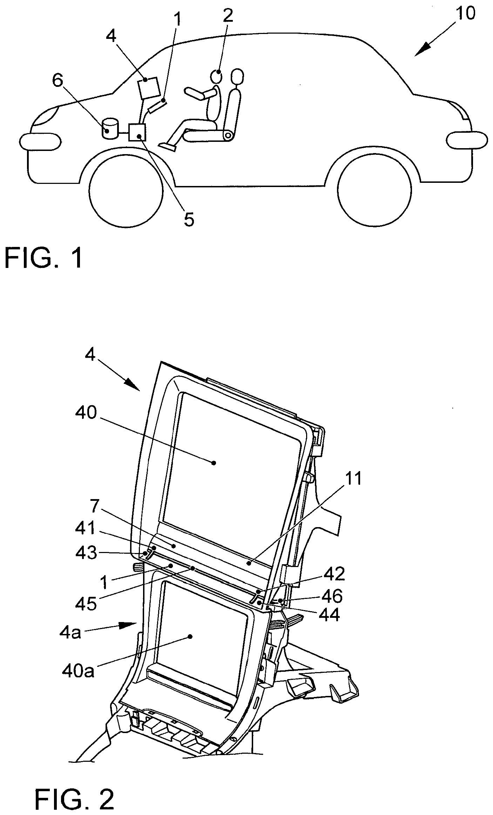

Figur 1 zeigt einen PKW 10 als Fortbewegungsmittel, in welchem ein Bildschirm 4 als Anzeigeeinheit informationstechnisch mit einem elektronischen Steuergerät 5 als Auswerteeinheit verbunden ist. Eine horizontal unterhalb des Bildschirms 4 angeordnete Fingerleiste 1 ist zur Erfassung von Anwendergesten sowie zur optischen Quittierung derselben mittels Lichtsignalen informationstechnisch mit dem elektronischen Steuergerät 5 verbunden. Ein Datenspeicher 6 hält vordefinierte Referenzen zur Klassifikation der Anwendergesten bereit und dient der Definition den klassifizierten Anwendergesten zugeordneter Lichtsignalmuster. Ein Anwender 2 streckt seinen Arm im Wesentlichen horizontal aus, um eine Wischgeste auf der Fingerleiste 1 vorzunehmen. Vertikalbeschleunigungen des PKWs 10 würden ohne die Fingerleiste 1 dazu führen, dass der Anwender die Fingerleiste 1 mitunter verfehlt. Zudem müsste der Anwender 2 sein Augenmerk auf die Fingerleiste 1 richten, um seinen Finger sauber auf derselben zu positionieren. Durch die vorgestellte Technologie können diese Vorgänge unterbleiben, da die Fingerleiste 1 eine vorteilhafte simsartige Struktur zur Führung des Fingers des Anwenders 2 aufweist.

Figur 2 zeigt ein Ausführungsbeispiel einer Vorrichtung mit zwei Bildschirmen 4, 4a, welche im Wesentlichen übereinander zur Anordnung in einer Mittelkonsole bzw. einem Armaturenbrett eines Fortbewegungsmittels vorgesehen sind. Die Anzeigeflächen 40, 40a der Bildschirme 4, 4a sind von oben nach unten der Reihe nach durch einen stegförmigen Rahmenteil 11 als haptische Barriere, eine Infrarot-LED-Leiste 7 als Annäherungssensorik und eine konkav ausgeführte Fingerleiste 1 getrennt, in welche ein linienförmiger Lichtauslass 45 eingelassen ist, welcher der Längserstreckungsrichtung der Fingerleiste 1 folgt. Distale Bereiche 43, 44 der Fingerleiste 1 sind durch senkrecht zur Längserstreckungsrichtung orientierte Stegstrukturen 41, 42 gegenüber einem mittleren Wischgestenbereich der Fingerleiste 1 als Schaltflächen abgegrenzt bzw. kenntlich gemacht. An den linienförmigen Lichtauslass 45 grenzt ein sich im Wesentlichen in Fahrtrichtung erstreckender Lichtleiter 46, welcher aus Fahrtrichtung stammendes Licht zur Erzeugung quittierender Lichtsignale in Richtung des Anwenders leitet.

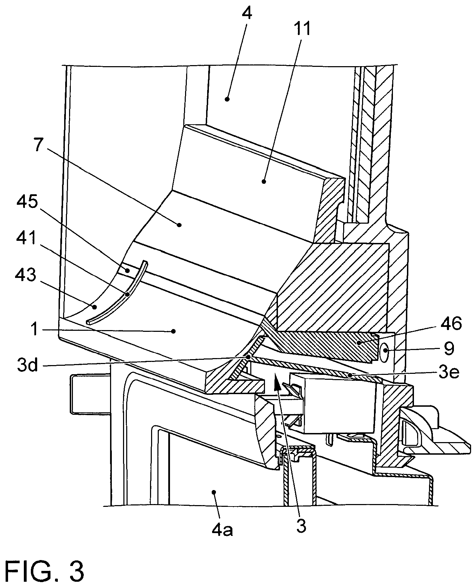

Figur 3 zeigt eine Detailansicht des in Figur 2 dargestellten Ausführungsbeispiels einer Vorrichtung. In dieser Ansicht ist exemplarisch eine LED 9 als Leuchtmittel einer Lichtquelle in Fahrtrichtung am Lichtleiter 46 vorgesehen, durch welche ein schmaler, jedoch diffus bzw. unscharf begrenzter Bereich des Lichtaustritts 45 im Licht der LED 9 erstrahlt. Kurz unterhalb der Oberfläche der Fingerleiste 1 ist ein Träger 3d einer kapazitiven Erfassungseinheit 3 angeordnet, welcher mit einer Platine 3e mechanisch und elektrisch verbunden ist. Die Platine 3e trägt (nicht dargestellte) elektronische Bauelemente zum Betrieb der Erfassungseinheit 3.

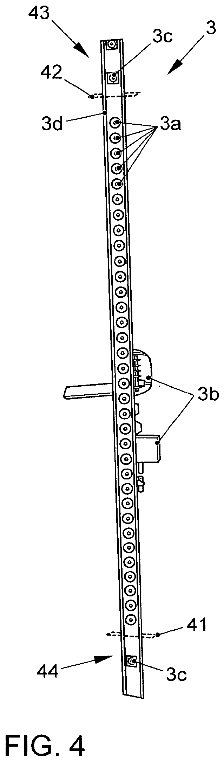

Figur 4 zeigt ein Ausführungsbeispiel einer Erfassungseinheit 3, wie sie in Figur 3 vorgestellt worden ist. In der Draufsicht nach Figur 4 sind linienförmig nebeneinander angeordnete kapazitive Antennen 3a auf dem Träger 3d zu erkennen, welche jeweils eine kreisscheibenförmige Gestalt aufweisen und äquidistant zueinander angeordnet sind. Durch gestrichelt dargestellte Stege 41, 42 werden Endbereiche 43, 44 gekennzeichnet, welche jeweils eine quadratisch ausgeführte kapazitive Antenne 3c zur Entgegennahme von Druck- und/oder Tipp- und/oder Long-Press-Gesten aufweisen. Elektronische Bauelemente 3b sind auf der Platine (Bezugszeichen 3e) in Figur 3 angeordnet und für den Betrieb der Antennen 3a, 3c vorgesehen.

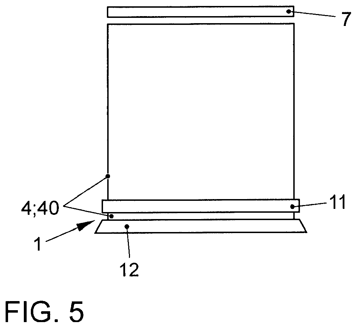

Figur 5 zeigt eine Prinzipskizze eines alternativen Ausführungsbeispiels einer Vorrichtung zur Bedienung eines Infotainmentsystems. Oberhalb eines Bildschirms 4 mit einer Anzeigefläche 40 ist eine Annäherungssensorik 7 zur Erkennung einer Annäherung einer Hand eines Anwenders an die Vorrichtung vorgesehen. Ein im Wesentlichen horizontal erstreckter Steg 11 auf dem Bildschirm 4 begrenzt einen schmalen Oberflächenbereich der Anzeigefläche 40, welcher einer Fingerleiste 1 zugeordnet ist, von einem Hauptanzeigebereich der Anzeigefläche 40. Der Bildschirm 4 ist als Touch-Screen (englisch für: "berührungsempfindliche Anzeigeeinheit") ausgestaltet, wie er im Stand der Technik bekannt ist. Zur Realisierung einer Vorrichtung wird jedoch ein oberhalb des Steges 11 angeordneter Anzeigebereich 40 gänzlich anders angesteuert als ein unterhalb des Steges 11 angeordneter Bereich, welcher die Erfassungseinheit und den Lichtauslass der Vorrichtung bildet. Mit anderen Worten ist ein einstückiger Bildschirm 4 in Form eines Touch-Screens vorgesehen, dessen unterer Rand die Erfassungseinheit und den Lichtauslass der Vorrichtung bildet. Nach unten abgegrenzt wird die Fingerleiste 1 durch einen im Wesentlichen horizontalen Sims 12 zur Auflage eines Fingers und dessen Führung beim Ausführen einer Wischgeste.

### Stand der Technik

Die vorliegende Erfindung betrifft ein Fortbewegungsmittel, eine Anwenderschnittstelle sowie ein Verfahren zur übergreifenden Anzeige eines Anzeigeinhaltes einer Anwenderschnittstelle auf mindestens zwei Anzeigeeinrichtungen eines Fortbewegungsmittels. Insbesondere betrifft die vorliegende Erfindung intuitive Anwenderbedienschritte zur Erweiterung einer einem Anzeigeinhalt zugeordneten Darstellungsfläche.

Moderne Fortbewegungsmittel weisen eine Vielzahl Funktionen auf, welche über Schalter und Bildschirme angezeigt und bedient werden können. In dem Bestreben, den Innenraum von Fahrzeugen mit möglichst wenigen Schaltern auszustatten, werden immer mehr Inhalte und Einstellungen auf immer größere Anzeigeeinrichtungen (z.B. Touchscreens) verlagert. Durch die große zur Verfügung stehende Fläche besteht ein zunehmendes Bestreben der Entwickler darin, die Flexibilität der Nutzung der Fläche sowie die Anzeige-/Bedienergonomie für den Anwender bestmöglich zu gestalten. Hierbei sind auch Ansätze bekannt, einer bestimmten Funktion zugeordnete Anzeige-/Bedienelemente zunächst auf einer ersten Anzeigeeinrichtung im Fortbewegungsmittel darzustellen und im Ansprechen auf eine vordefinierte Anwendergeste auf eine zweite Anzeigeeinrichtung zu verschieben. Auf diese Weise kann beispielsweise einem Anwenderwunsch zur Anpassung der Darstellungsposition entsprochen werden.

WO 2010/042101 A1 offenbart ein Infotainment-System eines Fortbewegungsmittels mit einem anteilig hinter einem Lenkrad angeordneten Bildschirm, auf welchem durch den Lenkradkranz optisch eingeschlossene Anzeigemodule von außerhalb des Lenkradkranzes angeordneten Anzeigemodulen unterschieden werden. Im Ansprechen auf eine vordefinierte Anwendereingabe kann eine Informationseinheit zwischen den Anzeigemodulen bewegt werden. Eine entsprechende Vorrichtung ist der DE 10 2009 036 371 A1 zu entnehmen.

DE 10 2009 046 010 A1 offenbart eine Fahrzeuginformationsanzeige mit hierarchisch gegliederten Informationsanzeigeebenen. Über eine Anwendereingabe kann eine bestimmte Informationsanzeigeebene zur Anzeige gebracht werden.

WO 2010/042101 A1 offenbart eine Anwenderschnittstelle für ein Fortbewegungsmittel, deren Anzeigeelemente (first display module/second display module) in unterschiedlichen Blickbereichen des Anwenders (z.B. im Bereich eines Kombiinstrumentes bzw. im Bereich eines zentralen Informationsdisplay (CID)) angeordnet sind. Um eine temporäre Sichtung eines außerhalb eines primären Sichtbereiches angeordneten Anzeigeinhaltes im primären Sichtbereich zu ermöglichen wird vorgeschlagen, eine Anwendergeste zu erkennen und im Ansprechen auf diese den Anzeigeinhalt (erstmalig) auch auf der im primären Sichtbereich des Anwenders befindlichen Anzeigeeinheit darzustellen.

DE 10 2012 022 312 A1 offenbart ein Informationswiedergabesystem, welches ein einziges Display aufweist, welches zwar informationstechnisch definierte Teilflächen mit einer Grenze im Ansprechen auf eine vordefinierte Anwendergeste (Wischgeste) derart modifiziert, dass die Grenze verschoben und ein Verhältnis der Teilflächen verändert wird.

EP 2 261 793 A2 offenbart ein Verfahren zum Übertragen von Anzeigeinhalten von einem ersten Bildschirm auf einen zweiten Bildschirm. Zunächst nur auf einem Bildschirm angezeigte Inhalte können im Ansprechen auf eine Wischgeste auf eine andere Anzeigeeinheit übertragen werden.

FR 2 971 878 A1 offenbart eine Anwenderschnittstelle für ein Fortbewegungsmittel mit einer mehrteiligen Anzeige. Mittels einer vordefinierten Wischgeste können Anzeigeinhalte von einem ersten Teil der Anzeige in einen zweiten Teil der Anzeige verschoben werden.

EP 2 455 843 A2 offenbart eine Anwenderschnittstelle für ein Flugzeug, welches einen Touchscreen und eine diesen umgebende Randmulde aufweist. Die Randmulde ist dazu ausgestaltet, die Hand des Anwenders zu stabilisieren, wenn das mit der Anwenderschnittstelle ausgestattete Flugzeug Vibrationen oder Turbulenzen erfährt. Ein kapazitiver Sensor im Bereich der Randmulde ist imstande, einen Finger innerhalb der Randmulde zu erkennen und zu lokalisieren, um auf dem in herkömmlicher Weise bedienten Touch-Bereich ausgeführte Gesten in Abhängigkeit einer Anzahl und Position der Finger zu interpretieren.

Untersuchungen haben gezeigt, dass frei wählbare Positionen für auf unterschiedlichen Anzeigeeinrichtungen anzeigbare Informationselemente die Orientierung des Anwenders erheblich erschweren.

Es ist daher eine Aufgabe der vorliegenden Erfindung, die Orientierung eines Anwenders bei der flexiblen Nutzung mehrerer Anzeigeeinrichtungen in einem Fortbewegungsmittel zu unterstützen bzw. zu verbessern.

### Offenbarung der Erfindung

Die vorliegend identifizierte Aufgabe wird erfindungsgemäß durch eine Anwenderschnittstelle und ein Verfahren zur übergreifenden Anzeige eines Anzeigeinhaltes einer Anwenderschnittstelle eines Fortbewegungsmittels gelöst. Die Erfindung beruht auf der Erkenntnis, dass eine logische Verankerung eines Funktionsumfangs bzw. eines Informationsumfangs mit einer einzigen Anzeigeeinrichtung die Orientierung des Anwenders verbessern kann. Das Fortbewegungsmittel kann beispielsweise ein PKW, ein LKW, ein Motorrad, ein Luft- und/oder Wasserfahrzeug sein. In einem ersten Schritt wird ein erster Anzeigeinhalt auf einer ersten Anzeigeeinrichtung (z.B. ein Bildschirm) des Fortbewegungsmittels angezeigt. Die Anzeigeeinrichtung kann auch zur Entgegennahme von Anwendereingaben ausgestaltet sein und hierzu beispielsweise eine berührungsempfindliche Oberfläche zur Auflösung von Ein- oder Mehrfingergesten aufweisen. Der Anzeigeinhalt sei als ein solcher Bereich verstanden, welcher einem vordefinierten Funktionsumfang der Anwenderschnittstelle bzw. des Fortbewegungsmittels zugeordnet ist. Insbesondere können Fahrzeugfunktionen, Unterhaltungsfunktionen und Informationen eines vordefinierten Themengebietes als optisches Cluster den ersten Anzeigeinhalt ausmachen. Der Anzeigeinhalt kann als Fenster, beispielsweise mit einem Rahmen, ausgestaltet und/oder mit einer intransparenten oder teiltransparenten Hintergrundfarbe optisch hervorgehoben werden. Der Anzeigeinhalt kann beispielsweise Bedienflächen und/oder Schaltflächen aufweisen, über welche Funktionen des Anzeigeinhaltes mittels Anwendereingaben beeinflusst werden können. Anschließend wird eine vordefinierte Anwendereingabe bezüglich des ersten Anzeigeinhaltes empfangen. Mit der Anwendereingabe äußert der Anwender den Wusch, die Darstellungsfläche für den Anzeigeinhalt zu vergrößern und insbesondere zusätzliche Informationen/Eingabeelemente innerhalb des Anzeigeinhalts anzuzeigen. Hierzu wird im Ansprechen auf die empfangene Anwendereingabe eine dem ersten Anzeigeinhalt zugeordnete Fläche auf einer zweiten Anzeigeeinrichtung des Fortbewegungsmittels erweitert. Beispielsweise kann hierbei der zuvor ausschließlich auf der ersten Anzeigeeinrichtung dargestellte Anzeigeinhalt anteilig auf die zweite Anzeigeeinrichtung erweitert werden, wobei dem Anzeigeinhalt zusätzliche Informations- und/oder Bedienelemente hinzugefügt werden. Dies schließt jedoch nicht aus, dass bereits vor dem Empfangen der vordefinierten Anwendereingabe bezüglich des Anzeigeinhaltes die zweite Anzeigeeinrichtung bereits einen Flächenbereich zur Darstellung des Anzeigeinhaltes reserviert und/oder verwendet haben kann. Die erfindungsgemäß vorgeschlagene Erweiterung kann also eine erstmalige Anzeige des von Teilen des Anzeigeinhaltes oder eine zusätzliche Anzeige von Inhalten des Anzeigeinhaltes bedeuten. In jedem Fall wird die zweite Anzeigeeinrichtung nach dem Erweitern von einem vergrößerten Flächenbereich des Anzeigeinhaltes eingenommen. Auf diese Weise kann eine (temporär) erweiterte Nutzung der zweiten Anzeigeeinrichtung für den Anzeigeinhalt erfolgen, ohne dass der Anwender den optischen Bezug zwischen dem Anzeigeinhalt und der ersten Anzeigeeinrichtung verliert.

Die Unteransprüche zeigen bevorzugte Weiterbildungen der Erfindung.

Bevorzugt wird die erste Anzeigeeinrichtung auch nach dem Erweitern des Anzeigeinhaltes auf die zweite Anzeigeeinrichtung zur (anteiligen) Darstellung des Anzeigeinhaltes verwendet. Dieser auf der ersten Anzeigeeinrichtung verbliebene Teil des Anzeigeinhaltes sorgt als optischer und logischer "Anker" für den Anzeigeinhalt. Insbesondere wird die Darstellung des auf der ersten Anzeigeeinrichtung dargestellten Anzeigeinhaltes durch das erfindungsgemäße Erweitern nicht beeinflusst. Bevorzugt bleibt zumindest die dem Anzeigeinhalt auf der ersten Anzeigeeinrichtung zugeordnete Fläche der Größe und/oder der Form nach erhalten. Dies schließt nicht aus, dass einzelne Elemente innerhalb des Anzeigeinhaltes nach dem Erweitern des Anzeigeinhaltes auf die zweite Anzeigeeinrichtung eine andere Größe und/oder eine andere Gestalt und/oder eine andere Position aufweisen, von welchen letztere auch auf der zweiten Anzeigeeinrichtung angeordnet sein kann. Auf diese Weise wird eine flexible Nutzung unterschiedlicher Anzeigeeinrichtungen unter Beibehaltung eines logischen Bezuges des Anzeigeinhaltes zur ersten Anzeigeeinrichtung möglich.

Während der vorgenannte Anzeigeinhalt (nachfolgend "erster Anzeigeinhalt") auf der zweiten Anzeigeeinrichtung erfindungsgemäß erweitert wird, kann ein bereits zuvor auf der zweiten Anzeigeeinrichtung angezeigter zweiter Anzeigeinhalt fortwährend (anteilig) angezeigt werden. Mit anderen Worten wird der erste Anzeigeinhalt nicht auf die gesamte Fläche der zweiten Anzeigeeinrichtung erweitert und bleibt nach der erfindungsgemäßen Erweiterung durch Anteile des zweiten Anzeigeinhaltes umgeben. Dies verstärkt den Eindruck des Anwenders, dass die erfindungsgemäße Erweiterung des ersten Anzeigeinhaltes auf die erste Anzeigeeinrichtung lediglich temporär zu verstehen ist und verstärkt somit den logischen Bezug desselben zur ersten Anzeigeeinrichtung.

Der erste Anzeigeinhalt kann zur Verstärkung einer Abgrenzung (bzw. zur Entgegenwirkung des Eindrucks einer Verschmelzung des ersten Anzeigeinhaltes und des zweiten Anzeigeinhaltes) einen optisch geschlossenen, gegenüber dem zweiten Anzeigeinhalt auf der zweiten Anzeigeeinrichtung erscheinenden Rand gekennzeichnet sein. Insbesondere kann der Rand durch eine geschlossene Randlinie zwischen dem ersten Anzeigeinhalt und dem zweiten Anzeigeinhalt ausgestaltet sein. Eine einfache und optisch höchst wirksame Maßnahme kann darin bestehen, dem ersten Anzeigeinhalt eine andere Hintergrundfarbe als dem zweiten Anzeigeinhalt zu verleihen. Insbesondere kann die Hintergrundfarbe des ersten Anzeigeinhaltes den zweiten Anzeigeinhalt überdecken (der Hintergrund des ersten Anzeigeinhalt ist also lediglich unvollständig oder überhaupt nicht transparent). Alternativ oder zusätzlich kann der erste Anzeigeinhalt durch eine optische Hervorhebung der Randlinie nach Art eines Rahmens oder eines Schattens auf dem zweiten Anzeigeinhalt gegenüber dem zweiten Anzeigeinhalt abgegrenzt werden. Alternativ oder zusätzlich kann der zweite Anzeigeinhalt nach der erfindungsgemäßen Erweiterung verschwommen und/oder abgedunkelt und/oder mit geringerem Kontrast und/oder verkleinert (in die Zeichenebene hinein verschoben) und/oder mit einer geringeren Sättigung, insbesondere sepiafarben oder gräulich dargestellt werden, um den optischen Fokus auf der Bedienbarkeit des ersten Anzeigeinhaltes zu lenken und dennoch den temporären Charakter der Erweiterung des ersten Anzeigeinhaltes hervorzuheben.

Um die erfindungsgemäße Erweiterung des ersten Anzeigeinhaltes auf die zweite Anzeigeeinrichtung rückgängig zu machen, kann beispielsweise eine Wischgeste in Richtung der ersten Anzeigeeinrichtung vorgesehen sein, welche insbesondere bezüglich des auf der zweiten Anzeigeeinrichtung erweiterten Anzeigeinhaltes, zumindest aber unter Bezug auf die zweite Anzeigeeinrichtung durchgeführt bzw. erfasst wird. Die im Rahmen der vorliegenden Erfindung durchgeführten Wischgesten können als berührende Eingaben auf einer berührungsempfindlichen Oberfläche einer Eingabeeinrichtung (z.B. ein Touchscreen) und/oder als frei im Raum ausgeführte (3D-)Gesten ausgeführt werden. Alternativ oder zusätzlich kann eine Tippgeste auf den zweiten Anzeigeinhalt auf der zweiten Anzeigeeinrichtung oder auf einen vordefinierten Bereich innerhalb des erweiterten ersten Anzeigeinhaltes auf der zweiten Anzeigeeinrichtung als Steuerbefehl dafür vorgesehen sein, dass die Erweiterung des ersten Anzeigeinhaltes (zumindest anteilig) rückgängig gemacht wird. Mit anderen Worten wird im Ansprechen auf die vorgenannten Anwendereingaben die dem ersten Anzeigeinhalt zugeordnete Fläche auf der zweiten Anzeigeeinrichtung verringert. Beispielsweise kann eine im Rahmen der Erweiterung verschobene Randlinie des ersten Anzeigeinhaltes in Richtung der ersten Anzeigeeinrichtung verschoben werden. In Abhängigkeit der gewählten Position der Randlinie bzw. der gewählten Größe der auf der zweiten Anzeigeeinrichtung dargestellten Fläche des ersten Anzeigeinhaltes können die enthaltenen Informations-/Bedienelemente dynamisch bezüglich ihrer Position und/oder Größe und/oder Gestalt angepasst werden. Dies unterstützt die bestmögliche und flexible Nutzung des ersten Anzeigeinhaltes sowie der insgesamt zur Verfügung stehenden Anzeigefläche der Anzeigeeinrichtungen des Fortbewegungsmittels.

Gemäß einem zweiten Aspekt der vorliegenden Erfindung wird eine Anwenderschnittstelle für ein Fortbewegungsmittel vorgeschlagen, welche eine erste Anzeigeeinrichtung (z.B. ein Bildschirm, "Sekundärbildschirm"), eine zweite Anzeigeeinrichtung (z.B. ein Bildschirm, "Primärbildschirm"), eine Erfassungseinheit zur Erfassung von Anwendergesten (z.B. umfassend eine berührungsempfindliche Oberfläche und/oder eine kapazitive Eingabeeinrichtung und/oder eine optische Erfassungseinrichtung zur Auflösung dreidimensionaler Anwendergesten) und eine Auswerteeinheit (z.B. umfassend einen programmierbaren Prozessor, Mikrocontroller, Nanocontroller o.ä.) umfasst. Die erste Anzeigeeinrichtung ist eingerichtet, einen ersten Anzeigeinhalt anzuzeigen. Die Erfassungseinheit ist eingerichtet, eine vordefinierte Anwendereingabe bezüglich des ersten Anzeigeinhaltes zu empfangen. Die Auswerteeinheit ist eingerichtet, im Ansprechen auf das Erfassen der vordefinierten Anwendereingabe eine dem ersten Anzeigeinhalt zugeordnete Fläche auf der zweiten Anzeigeeinrichtung des Fortbewegungsmittels auszuweiten. Die erste Anzeigeeinrichtung kann beispielsweise als Sekundärbildschirm zur Anordnung in einem unteren Bereich eines Armaturenbrettes (z.B. insbesondere zur Anzeige und/oder Bedienung von Heiz-/Klimaumfängen und/oder Anzeige von Bedienelementen zur Einflussnahme auf grundlegende Funktionen einer Medienwiedergabe und/oder einer Routenführung) ausgestaltet sein. Die zweite Anzeigeeinrichtung kann beispielsweise eine größere und zur zentralen Anordnung in einem Armaturenbrett eines Fortbewegungsmittels vorgesehene Matrixanzeige (zentrales Informationsdisplay) ausgestaltet sein. Die Erfassungseinheit kann eine Infrarot-LED-Leiste aufweisen, mittels welcher Annäherungsgesten und andere frei im Raum ausgeführte Gesten eines Anwenders erfasst werden können. Alternativ oder zusätzlich kann die Erfassungseinheit eine sogenannte "Fingerleiste" zur Entgegennahme mechanisch geführter Wischgesten eines Anwenders aufweisen, wie sie beispielsweise in der von der Anmelderin am 22.10.2014 unter dem Aktenzeichen 10 2014226760.9 beim DPMA eingereichten Patentanmeldung sowie oben als "erster Aspekt Fingerleiste" bezeichnet beschrieben worden ist.

Bevorzugt können die ersten Anzeigeeinrichtung und die zweite Anzeigeeinrichtung bezüglich einer ersten Richtung hintereinander bzw. nebeneinander bzw. untereinander angeordnet sein. Beispielsweise kann die erste Richtung im Wesentlichen vertikal orientiert sein, wodurch sich eine Anordnung der Anzeigeeinrichtung übereinander (z.B. im Armaturenbrett des Fortbewegungsmittels) ergibt. Entsprechend kann die erste Richtung im Wesentlichen horizontal orientiert sein, wodurch sich eine Anordnung der Anzeigeeinrichtungen im Wesentlichen nebeneinander (z.B. im Armaturenbrett eines Fortbewegungsmittels) ergibt. Bevorzugt können die Anzeigeeinrichtungen unterschiedliche Größen und/oder unterschiedliche Seitenverhältnisse aufweisen. Dies kann eine besonders umfassende Nutzung der im Armaturenbrett verfügbaren Fläche unterstützen.

Die Breite der ersten Anzeigeeinrichtung bezüglich der ersten Richtung (also die Ausdehnung der ersten Anzeigerichtung quer zur ersten Richtung) kann kleiner als eine entsprechende Breite der zweiten Anzeigeeinrichtung bezüglich der ersten Richtung sein. Mit anderen Worten ist diejenige Anzeigerichtung, welcher der erste Anzeigeinhalt originär zugeordnet ist, schmaler als die zweite Anzeigeeinrichtung. Bevorzugt erfolgt hierbei das Erweitern der dem ersten Anzeigeinhalt zugeordneten Fläche auf der zweiten Anzeigeeinrichtung ausschließlich auf der Breite der ersten Anzeigeeinrichtung. Mit anderen Worten bleibt der erste Anzeigeinhalt auf der zweiten Anzeigeeinrichtung auf die Breite der ersten Anzeigeeinrichtung beschränkt. Dies verstärkt den logischen und optischen Bezug zwischen dem ersten Anzeigeinhalt und der ersten Anzeigeeinrichtung.

Weiter bevorzugt kann eine dem ersten Anzeigeinhalt zugeordnete Fläche auf der ersten Anzeigeeinrichtung der zweiten Anzeigeeinrichtung nächstliegend angeordnet sein. Insbesondere ist die erste Anzeigeeinrichtung auf ihrer gesamten Breite dem ersten Anzeigeinhalt zugeordnet. Entsprechend kann eine dem ersten Anzeigeinhalt zugeordnete Fläche auf der zweiten Anzeigeeinrichtung der ersten Anzeigeeinrichtung nächstliegend angeordnet sein. Einander benachbarte Flächen auf den Anzeigeeinrichtungen stellen somit den ersten Anzeigeinhalt mit geringstmöglichem Abstand an der Stoßstelle zwischen den Anzeigeeinrichtungen dar. Auf diese Weise wird der erste Anzeigeinhalt bestmöglich als zusammenhängende Sinn- und/oder Funktionseinheit (auch "Fenster" oder "Kachel") wahrgenommen.

Die Anwendereingabe zur erfindungsgemäßen Erweiterung des ersten Anzeigeinhaltes auf der zweiten Anzeigeeinrichtung kann beispielsweise eine Wischgeste in Richtung einer Mitte der zweiten Anzeigeeinrichtung sein. Eine solche Wischgeste stellt eine besonders intuitive und in einem großen Flächenbereich ausführbare Anwendereingabe zur Erweiterung des ersten Anzeigeinhaltes dar. Alternativ oder zusätzlich kann eine Tipp-Geste auf eine Schaltfläche zur Erweiterung des ersten Anzeigeinhaltes vordefiniert sein. Die Schaltfläche kann beispielsweise in einem der ersten Anzeigeeinrichtung nächstliegenden Flächenbereich der zweiten Anzeigeeinrichtung oder in einem der zweiten Anzeigeeinrichtung nächstliegenden Flächenbereich der ersten Anzeigeeinrichtung dargestellt werden. Mit anderen Worten ist die Schaltfläche bevorzugt an einer solchen Stelle angeordnet, an welcher sich aktuell eine solche Randlinie des ersten Anzeigeinhaltes befindet, welche es bei der Erweiterung zu verschieben bzw. neu anzuordnen gilt.

Gemäß einem dritten Aspekt der vorliegenden Erfindung wird ein Computerprogrammprodukt vorgeschlagen, auf welchem Instruktionen gespeichert sind, die einen programmierbaren Prozessor (z.B. einer Auswerteeinheit einer erfindungsgemäßen Anwenderschnittstelle) in die Lage versetzen, die Schritte eines Verfahrens gemäß dem erstgenannten Erfindungsaspekt auszuführen bzw. die Anwenderschnittstelle in die Lage zu versetzen, dieses Verfahren auszuführen. Das Computerprogrammprodukt kann ein Datenspeicher, z.B. in der Form einer CD, DVD, Blu-ray-Disc, Flash-Speicher, Festplatte, RAM/ROM, Cache etc., ausgestaltet sein.

Gemäß einem vierten Aspekt der vorliegenden Erfindung wird eine Signalfolge repräsentierend Instruktionen vorgeschlagen, welche einen programmierbaren Prozessor (z.B. einer Auswerteeinheit einer erfindungsgemäßen Anwenderschnittstelle) in die Lage versetzen, die Schritte eines Verfahrens gemäß einem erstgenannten Erfindungsaspekt auszuführen bzw. die Anwenderschnittstelle einzurichten, dieses Verfahren auszuführen. Auf diese Weise wird auch die informationstechnische Bereitstellung der Instruktionen für den Fall unter Schutz gestellt, dass sich die hierzu erforderlichen Speichermittel außerhalb des Geltungsbereiches der beigefügten Ansprüche befinden.

Gemäß einem fünften Aspekt der vorliegenden Erfindung wird ein Fortbewegungsmittel (z.B. ein PKW, ein Transporter, ein LKW, ein Motorrad, ein Wasser- und/oder Luftfahrzeug) vorgeschlagen, welches eine Anwenderschnittstelle gemäß dem zweitgenannten Erfindungsaspekt umfasst. Einzelne oder sämtliche Komponenten der Anwenderschnittstelle können dabei insbesondere dauerhaft in die Informationsinfrastruktur des Fortbewegungsmittels integriert sein. Auch eine mechanisch dauerhafte Integration in das Fortbewegungsmittel ist alternativ oder zusätzlich für einzelne oder sämtliche Komponenten der Anwenderschnittstelle vorgesehen.

### Kurze Beschreibung der Zeichnungen

Nachfolgend werden Ausführungsbeispiele der Erfindung unter Bezugnahme auf die begleitenden Zeichnungen im Detail beschrieben. In den Zeichnungen ist:

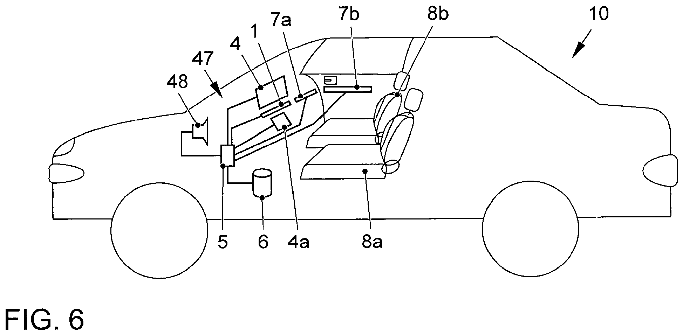

- Figur 6: eine schematische Ansicht auf Komponenten eines Ausführungsbeispiels eines erfindungsgemäßen Fortbewegungsmittels mit einem Ausführungsbeispiel einer erfindungsgemäßen Anwenderschnittstelle;

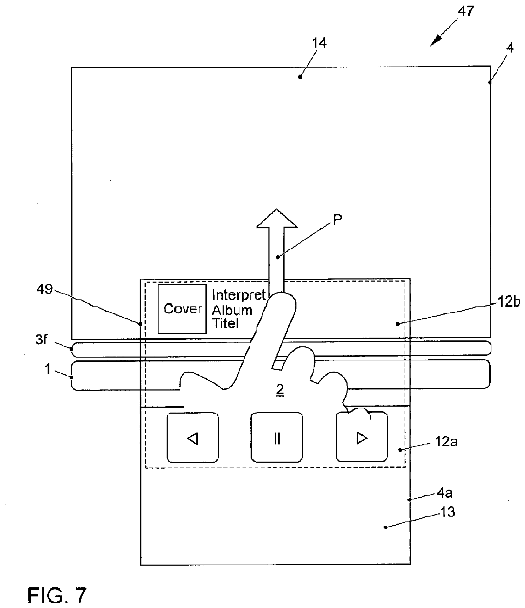

- Figur 7: eine Darstellung eines ersten Anwenderbedienschrittes bei der Bedienung eines Ausführungsbeispiels einer erfindungsgemäßen Anwenderschnittstelle;

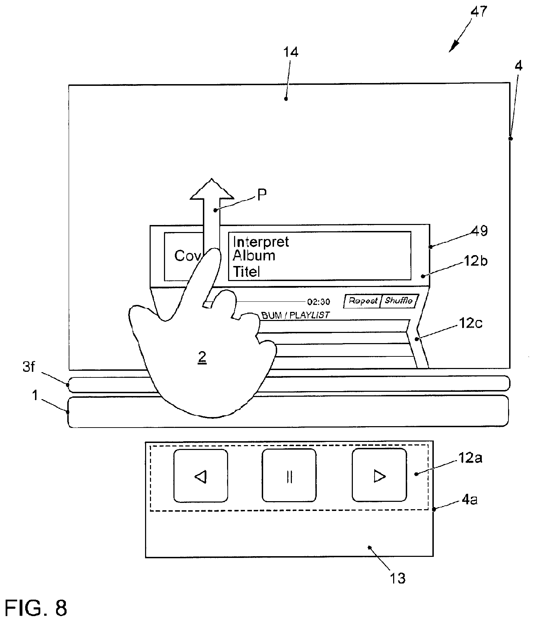

- Figur 8: eine Darstellung eines zweiten Anwenderbedienschrittes bei der Bedienung eines Ausführungsbeispiels einer erfindungsgemäßen Anwenderschnittstelle;

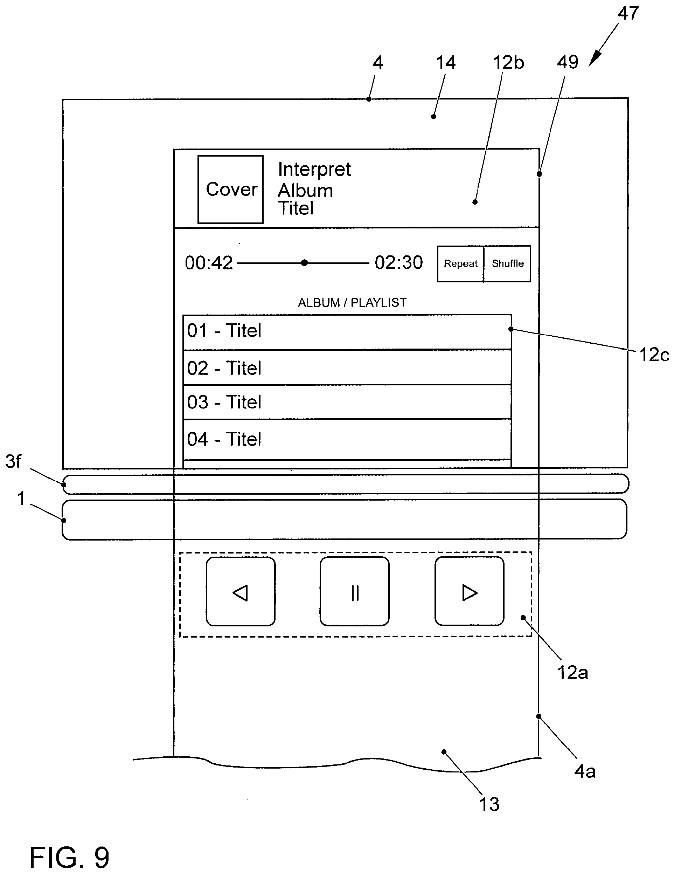

- Figur 9: das Ergebnis der in Verbindung mit den Figuren 7 und 8 veranschaulichten Anwenderinteraktion;

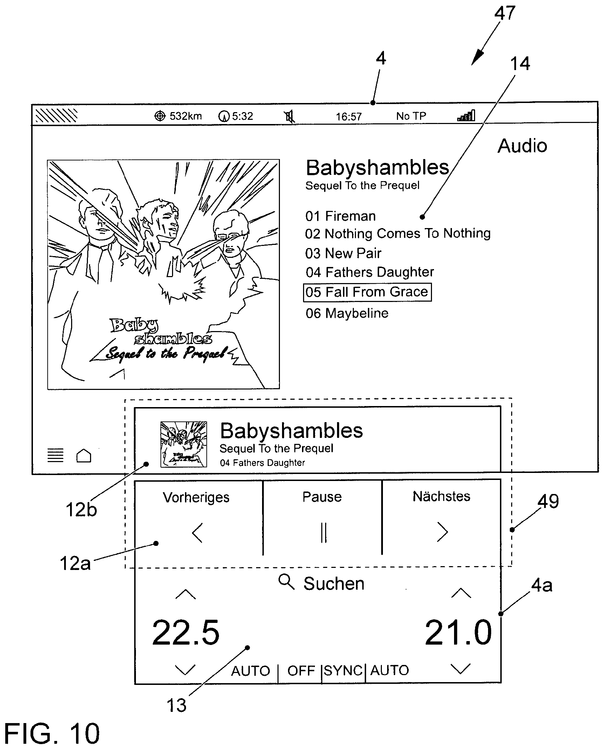

- Figur 10: eine Darstellung eines alternativen Ausführungsbeispiels einer erfindungsgemäß ausgestalteten Anwenderschnittstelle;

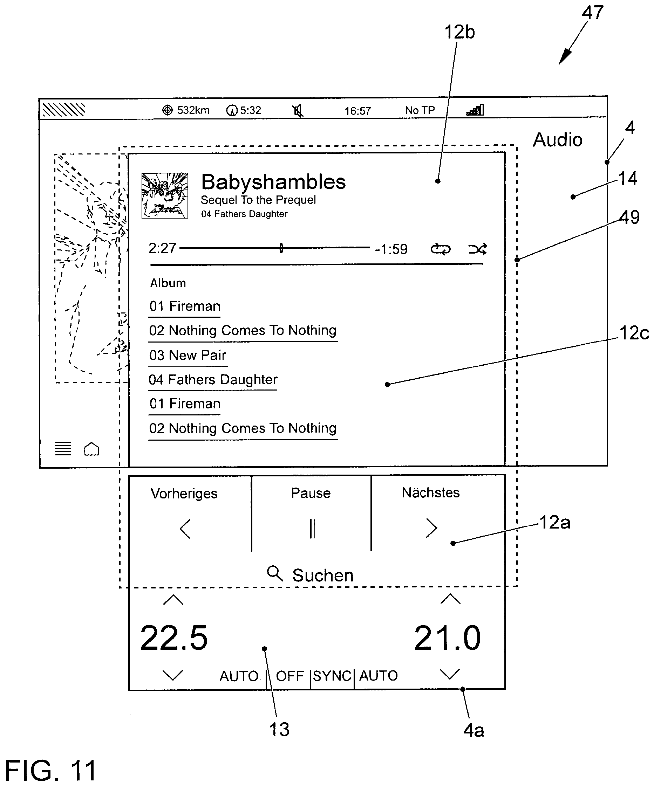

- Figur 11: eine Darstellung des Ergebnisses einer erfindungsgemäßen Erweiterung des in Fig. 10 dargestellten ersten Anzeigeinhaltes;

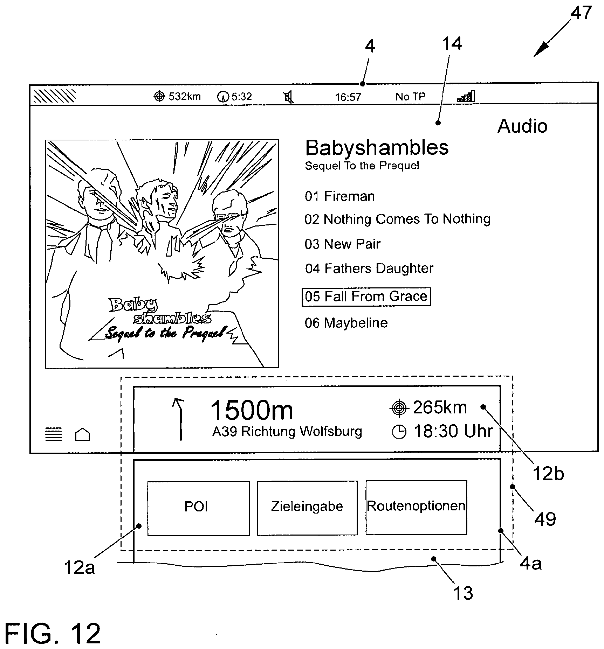

- Figur 12: ein drittes Ausführungsbeispiel einer erfindungsgemäßen Anwenderschnittstelle;

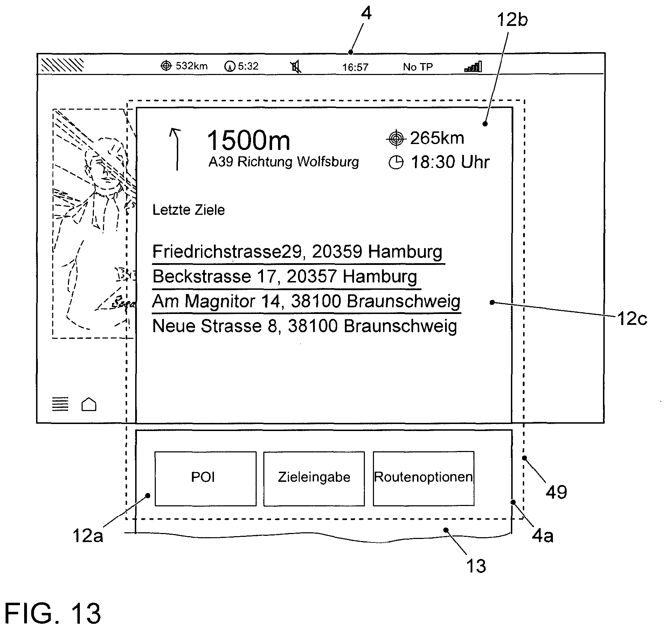

- Figur 13: das Ergebnis einer erfindungsgemäßen Erweiterung des in Fig. 12 dargestellten ersten Anzeigeinhaltes; und

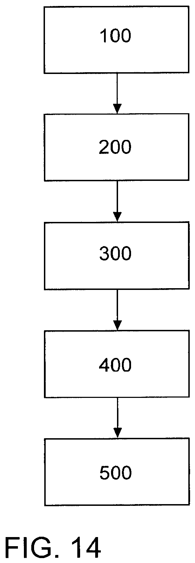

- Figur 14: ein Flussdiagramm veranschaulichend Schritte eines Ausführungsbeispiels eines erfindungsgemäßen Verfahrens.

### Ausführungsformen der Erfindung

Fig. 6 zeigt einen PKW 10 als Fortbewegungsmittel, in welchem ein Ausführungsbeispiel einer erfindungsgemäßen Anwenderschnittstelle 47 einen kleinen Bildschirm 4a als erste Anzeigeeinrichtung und einen darüber angeordneten größeren Bildschirm 4 als zweite Anzeigeeinrichtung aufweist. Zwischen den Bildschirmen 4, 4a ist eine Infrarot-LED-Leiste 3a als Erfassungseinheit zur Erfassung frei im Raum ausgeführter Gesten vorgesehen und ebenso wie die Bildschirme 4, 4a informationstechnisch mit einem elektronischen Steuergerät 5 als Auswerteeinheit verbunden. Zudem ist das elektronische Steuergerät an einen Datenspeicher 6 angeschlossen, welcher Referenzen für vordefinierte Anwendereingaben/Gesten und Computerprogrammcode zur Ausführung eines erfindungsgemäßen Verfahrens aufweist. Weiter ist das elektronische Steuergerät 5 an einen Lautsprecher 48 zur Ausgabe von Hinweis- und Quittiertönen angeschlossen. Über zusätzliche Steuerleitungen kann das elektronische Steuergerät 5 die Lichtausschüttung von Ambientelichtleisten 7a im Armaturenbrett und 7b in den Türen des PKWs 10 beeinflussen. Ein Fahrersitz 8a und ein Beifahrersitz 8b sind zur Aufnahme eines Fahrers bzw. eines Beifahrers als Anwender der Anwenderschnittstelle 47 vorgesehen.

Fig.7 zeigt eine Detailansicht der Oberfläche eines ersten Ausführungsbeispiels einer erfindungsgemäßen Anwenderschnittstelle 47. Auf einem kleineren Bildschirm 4a als erste Anzeigeeinrichtung werden in einem unteren Bereich 13 Heiz-/Klimaumfänge angezeigt. Ein darüber liegender Bereich 12a weist Schaltflächen zum Pausieren einer Medienwiedergabe bzw. zum Anwählen zurückliegender bzw. vorausliegender Titel/Kapitel auf. Der Bereich 12a ist über eine Anzeigefläche 49 (auch "Fenster" oder "Zusatzfenster") als erster Anzeigeinhalt mit Anzeigeelementen in einem Bereich 12b auf dem Bildschirm 4 optisch gruppiert, wodurch sich ein übergreifend angezeigter erster Anzeigeinhalt ergibt. Im Bereich 12b werden ein Cover eines aktuell wiedergegebenen Albums sowie Information zu "Interpret", "Albumtitel" und "Titel" angezeigt. Ein unabhängig von dem Bereich 12b angezeigter Bildschirminhalt 14 als zweiter Anzeigeinhalt des Bildschirms 4 kann thematisch unabhängig vom Inhalt der Anzeigefläche 49 gewählt werden. Zwischen den Bildschirmen 4, 4a befinden sich eine Fingerleiste 1 zur geführten Entgegennahme von Wischgesten eines Anwenders und eine Infrarot-LED-Leiste 3a zur Erfassung von 3D-Gesten einer Hand eines Anwenders 2. Zur erfindungsgemäßen Erweiterung der Anzeigefläche 49 führt der Zeigefinger der Hand des Anwenders 2eine Wischgeste entlang des Pfeils P aus, welche auf dem Bereich 12b startet und in Richtung der Bildschirmmitte des Bildschirms 4 orientiert ist.

Fig.8 zeigt ein Zwischenergebnis der in Fig. 7 gestarteten Wischgeste der Hand des Anwenders 2. Die Anzeigefläche 49 wird dadurch erweitert, dass zwischen dem Bereich 12a und dem Bereich 12b ein Bereich 12c umfassend zusätzliche Informationen und Schaltflächen/Schieberegler zur Einflussnahme auf die aktuelle Medienwiedergabe erscheint. Um den temporären Charakter der Erweiterung der Anzeigefläche 49 und die originäre Verankerung der Anzeigefläche 49 im Bildschirm 4a zu bekräftigen, wird der Bereich 12c nach Art eines Entfaltungsvorgangs optisch animiert.

Fig. 9 zeigt das Ergebnis des in Fig. 7 gestarteten und in Fig. 8 fortgeführten Anwenderbedienschrittes, durch welchen die Anzeigefläche 49 neben den Bereichen 12a, 12b einen vollständig entfalteten Bereich 12c zeigt. Die Richtung der Anwendereingabe (Pfeil P in Fig. 8) entspricht der anspruchsgemäßen ersten Richtung, in welcher die Bildschirme 4, 4a hintereinander bzw. übereinander angeordnet sind. Erkennbar weisen die Bildschirme 4, 4a senkrecht zur Haupterstreckungsrichtung der Fingerleiste 1 unterschiedliche Breiten auf, wobei der Bildschirm 4a schmaler als der Bildschirm 4 ausgestaltet ist. Auch der sich auf der dem zweiten Bildschirm 4 erstreckende Flächenbereich der Anzeigefläche 49 ist hinsichtlich einer Breite und der Position seiner parallel zur Richtung des Pfeils P orientierten Ränder entsprechend dem Bildschirm 4a begrenzt. Hierbei sind die Bereiche 12a, 12b, 12c derart nächstliegend zueinander angeordnet, dass die Anzeigefläche 49 nicht durch themenfremde Anzeigeelemente durchbrochen ist. Lediglich die Hardwareelemente Fingerleiste 1 und Infrarot-LED-Leiste 3a durchbrechen die ansonsten nach Art eines kompakten Fensters gestaltete Anzeigefläche 49. Sämtliche Bereich der Anzeigefläche 49, welche nicht einer gesonderten Funktion/Schaltfläche zugeordnet sind, können verwendet werden, um durch Entgegennahmen einer Tippgeste die erfindungsgemäße Erweiterung der Anzeigefläche 49 rückgängig zu machen und in eine Konfiguration gemäß Fig. 7 zurückzukehren. Entsprechendes gilt für auf dem Bildschirm 4 angezeigte zweite Anzeigeinhalte 14, welchen in der Darstellung nach Fig. 9 keine eigene Bedienfunktion zugeordnet ist.

Fig. 10 zeigt eine alternative Darstellung eines zweiten Ausführungsbeispiels einer Oberfläche einer erfindungsgemäßen Anwenderschnittstelle 47. Die Klimabedienumfänge 13 innerhalb des Bildschirms 4a sind nach Art von Schaltflächen Implementiert-/Dekrementierschaltflächen zur Anpassung einer Innenraumtemperatur für die Fahrer-/Beifahrerseite ausgestaltet. Der zweite Anzeigeinhalt 14 des Bildschirms 4 ist ebenso wie die Anzeigefläche 49 einer aktuellen Audiowiedergabe zugeordnet, weist jedoch aktuell keine Schaltflächen zur Steuerung der Audiowiedergabe auf. Die Bedienelemente des Bereiches 12a entsprechen im Wesentlichen denjenigen des ersten Ausführungsbeispiels (Fign. 7-9), sind jedoch um eine "Suchen"-Schaltfläche erweitert worden. Die Anzeigefläche 49 weist im auf dem zweiten Bildschirm 4 angeordneten Bereich 12b im Wesentlichen dieselben Informationen auf, welche im zweiten Anzeigeinhalt 14 enthalten sind. Daher dient der Bereich 12b im Wesentlichen als Anfasser zur erfindungsgemäßen Erweiterung der Anzeigefläche 49. Der Bereich 12b kann also verwendet werden, um durch Entgegennahme einer Tipp-Geste oder einer auf dem Bereich 12b gestarteten Wischgeste in Richtung der Mitte des Bildschirms 4, die in Fig. 11 dargestellte Anordnung einer erfindungsgemäß erweiterten Anzeigefläche 49 zu erzeugen.

Fig. 11 zeigt das Ergebnis einer erfindungsgemäßen Erweiterung der Anzeigefläche 49 um einen Bereich 12c, welcher eine Titelliste, Schaltflächen und einen Schieberegler zur Entgegennahme zusätzlicher Anwenderbefehle bezüglich der Medienwiedergabe aufweist. Die Anzeigefläche 49 stellt ein Fenster dar, welches auf dem Bildschirm 4 gegenüber dem bislang scharf, farbig und hell dargestellten Bildschirminhalt 14 optisch klar mit einem Fokus belegt ist, indem der Bildschirminhalt 14 nun unscharf, abgedunkelt und mit verringerter Farbsättigung dargestellt wird. Eine Anwendereingabe in Form einer Wischgeste auf den Bereich 12b, einer Tippgeste auf den Bereich 12b oder einer Tippgeste auf den Bildschirminhalt 14 macht die erfindungsgemäße Erweiterung der Anzeigefläche 49 rückgängig, sodass im Ergebnis erneut die in Fig. 10 dargestellte Konfiguration dargestellt wird.

Fig. 12 zeigt eine Ansicht eines dritten Ausführungsbeispiels einer erfindungsgemäßen Anwenderschnittstelle 47, in welcher die Anzeigefläche 49 einer Funktionsfamilie zum Thema Routenführung zugeordnet ist. Der Bereich 12a zeigt nun Schaltflächen zur Zieleingabe, zum Aufrufen von Routenoptionen und zur Anzeige nahegelegener Sehenswürdigkeiten. Der Bereich 12b zeigt zusammenfassende Informationen bezüglich einer aktuellen Entfernung zum Routenziel, eine zu erwartende Ankunftszeit und Information zu einem nächsten anstehenden Manöver. Der übrige Bildschirminhalt 14 des Bildschirms 4 ist entsprechend der Fig. 10 einer aktuellen Medienwiedergabe zugeordnet.

Fig. 13 zeigt das Ergebnis einer (nicht-dargestellten) Tippgeste eines Anwenders auf den in Fig. 12 gezeigten Bereich 12b der Anzeigefläche 49. Im Ansprechen auf die Anwendereingabe wird die Anzeigefläche 49 auf dem zweiten Bildschirm 4 erfindungsgemäß durch Einfügung eines Bereiches 12c erweitert, in welchem eine Liste letzter Ziele angezeigt und zur Auswahl bereit gehalten wird. Wie in Verbindung mit Fig. 11 beschrieben, wird der übrige Bildschirminhalt 14 im Ansprechen auf die erfindungsgemäße Erweiterung unscharf, abgedunkelt und sepia-farben dargestellt, um den temporären Charakter der erfindungsgemäßen Erweiterung der Anzeigefläche 49 zu unterstreichen und den Anwender zu animieren, durch eine Tippgeste auf den Bildschirminhalt 14 die erfindungsgemäße Erweiterung der Anzeigefläche 49 rückgängig zu machen.

Fig. 14 zeigt ein Flussdiagramm veranschaulichend Schritte eines Verfahrens zur übergreifenden Anzeige eines Anzeigeinhaltes einer Anwenderschnittstelle eines Fortbewegungsmittels. In Schritt 100 wird ein erster Anzeigeinhalt auf einer ersten Anzeigeeinrichtung des Fortbewegungsmittels angezeigt. Ein Teil des Anzeigeinhaltes wird zudem auf einer zweiten Anzeigeeinrichtung des Fortbewegungsmittels angezeigt. Im Schritt 200 wird eine vordefinierte Anwendereingabe bezüglich des ersten Anzeigeinhaltes empfangen. Die vordefinierte Anwendereingabe umfasst eine Wischgeste, welche auf einer Oberfläche innerhalb des ersten Anzeigeinhaltes startet und in Richtung einer zweiten Anzeigeeinrichtung des Fortbewegungsmittels orientiert ist. Im Ansprechen darauf wird im Schritt 300 eine dem ersten Anzeigeinhalt zugeordnete Fläche auf der zweiten Anzeigeeinrichtung des Fortbewegungsmittels erweitert. Mit anderen Worten wird eine der Mitte der zweiten Anzeigeeinrichtung nächstliegende Begrenzung des ersten Anzeigeinhaltes in Richtung eines der ersten Anzeigeeinrichtung abgewandten Randes der zweiten Anzeigeeinrichtung verschoben. In Schritt 400 wird zur Reduzierung der Fläche des ersten Anzeigeinhaltes auf der zweiten Anzeigeeinrichtung eine Wischgeste in Richtung der ersten Anzeigeeinrichtung empfangen. Die Wischgeste startet auf dem ersten Anzeigeinhalt auf der zweiten Anzeigeeinrichtung. In Schritt 500 wird im Ansprechen darauf die dem ersten Anzeigeinhalt zugeordnete Fläche auf der zweiten Anzeigeeinrichtung des Fortbewegungsmittels wieder verringert. Eine zwischenzeitliche unscharfe Darstellung und Verdunklung übriger, auf der zweiten Anzeigeeinrichtung angezeigter Bildschirminhalte wird nun wieder rückgängig gemacht, um dem Anwender die wiederhergestellte Bedienbarkeit dieser Bildschirminhalte zu veranschaulichen.

Auch wenn die erfindungsgemäßen Aspekte und vorteilhaften Ausführungsformen anhand der in Verbindung mit den beigefügten Zeichnungsfiguren erläuterten Ausführungsbeispiele im Detail beschrieben worden sind, sind für den Fachmann Modifikationen und Kombinationen von Merkmalen der dargestellten Ausführungsbeispiele möglich, ohne den Bereich der vorliegenden Erfindung zu verlassen, deren Schutzbereich durch die beigefügten Ansprüche definiert wird.

### Bezugszeichenliste

- 1: Fingerleiste
- 2: Anwender
- 3: Erfassungseinheit
- 3a: kapazitive Antennen
- 3b: elektronische Bauteile
- 3c: kapazitive Antennen (Tastbereich)
- 3d: Träger
- 3e: Platine der Erfassungseinheit
- 3f: Infrarot-LED-Leiste
- 4, 4a: Bildschirm
- 5: elektronisches Steuergerät
- 6: Datenspeicher
- 7: Annäherungssensorik
- 7a, 7b: Ambientelichtleisten
- 8a: Fahrersitz
- 8b: Beifahrersitz
- 9: LED
- 10: PKW
- 11: Steg/Rahmenteil
- 12: Sims
- 12a, 12b, 12c: Bereiche der Anzeigefläche
- 13: Heiz-/Klimabedienumfänge
- 14: Bildschirminhalt/ zweiter Anzeigeinhalt
- 40, 4a: Anzeigefläche
- 41, 42: haptische Grenzen
- 43, 44: Endbereiche
- 45: Lichtauslass
- 46: Lichtleiter
- 47: Anwenderschnittstelle
- 48: Lautsprecher
- 49: Anzeigefläche/erster Anzeigeinhalt
- 100-500: Bedienschritte
- P: Pfeil

## Patentansprüche

1. Verfahren zur übergreifenden Anzeige eines Anzeigeinhaltes einer Anwenderschnittstelle (1) eines Fortbewegungsmittels (10), wobei die Anwenderschnittstelle (1) umfasst:
- eine erste Anzeigeeinrichtung (4a),
- eine zweite Anzeigeeinrichtung (4),
- eine linien- oder kurvenförmig erstreckte Fingerleiste, welche zur haptischen Führung eines Fingers des Anwenders eingerichtet ist, wobei die Fingerleiste zwischen der ersten und zweiten Anzeigeeinrichtung (4, 4a) angeordnet ist, und und
- eine Erfassungseinheit (3, 3a), welche eingerichtet ist, eine auf der Fingerleiste ausgeführte Bewegung menschlichen Gewebes zu erfassen und in elektrische Signale zu wandeln, wobei das Verfahren die Schritte umfasst:
- Anzeigen (100) eines ersten einem ersten Anzeigeinhalt (13) zugeordneten Bereichs (12a) auf der ersten Anzeigeeinrichtung (4a) des Fortbewegungsmittels (10),
- Anzeigen eines zweiten Anzeigeinhaltes (14) auf der zweiten Anzeigeeinrichtung (4) des Fortbewegungsmittels (10),
- Anzeigen eines zweiten dem ersten Anzeigeinhalt (13) zugeordneten Bereiches (12b) auf der zweiten Anzeigeeinrichtung (4), wodurch sich ein übergreifend angezeigter erster Anzeigeinhalt ergibt,
- Empfangen (200) einer vordefinierten Anwendereingabe bezüglich des zweiten, dem ersten Anzeigeinhalt (13) zugeordneten und auf der zweiten Anzeigeeinrichtung (4) dargestellten Bereiches (12b), im Ansprechen darauf
- Erweitern (300) der dem ersten Anzeigeinhalt (13) zugeordneten Fläche auf der zweiten Anzeigeeinrichtung (4) des Fortbewegungsmittels (10), wobei das Erweitern der dem ersten Anzeigeinhalt zugeordneten Fläche auf die zweite Anzeigeeinrichtung (4) des Fortbewegungsmittels (10) umfasst:
- Überlagern und/oder Ersetzen des zweiten Anzeigeinhaltes (14) auf der zweiten Anzeigeeinrichtung (4) in einem dritten, zwischen dem ersten Bereich (12a) und dem zweiten Bereich (12b) angeordneten Bereich (12c) der zweiten Anzeigeeinrichtung (4), wobei der erste, der zweite und der dritte Bereich (12a, 12b, 12c) derart nächstliegend zueinander angeordnet sind, dass keine themenfremden Anzeigeelemente zwischen ihnen angeordnet sind, und
- fortwährendes Anzeigen des zweiten Anzeigeinhaltes (14) in übrigen Teilbereichen der zweiten Anzeigeeinrichtung (4).

2. Verfahren nach Anspruch 1, wobei der erste Anzeigeinhalt einen optisch geschlossen gegenüber dem zweiten Anzeigeinhalt (14) auf der zweiten Anzeigeeinrichtung (4) erscheinenden Rand aufweist.

3. Verfahren nach Anspruch 1, wobei das
- fortwährende Anzeigen des zweiten Anzeigeinhaltes (14) in übrigen Teilbereichen der zweiten Anzeigeeinrichtung (4) in einer modifizierten optischen Darstellung, insbesondere in einer
- unscharfen Darstellung, und/oder
- abgedunkelten Darstellung, und/oder
- verkleinerten Darstellung, und/oder
- verringerten Farbsättigung
erfolgt.

4. Verfahren nach einem der Ansprüche 2 oder 3, weiter umfassend
- Empfangen (400)
- einer Wischgeste in Richtung der ersten Anzeigeeinrichtung (4a), und/oder
- einer Tippgeste auf den zweiten Anzeigeinhalt (14) auf der zweiten Anzeigeeinrichtung (4), und
im Ansprechen darauf
- Verringern (500) der dem ersten Anzeigeinhalt zugeordneten Fläche auf der zweiten Anzeigeeinrichtung (4)des Fortbewegungsmittels (10).

5. Anwenderschnittstelle (1) für ein Fortbewegungsmittel (10) umfassend
- eine erste Anzeigeeinrichtung (4a),
- eine zweite Anzeigeeinrichtung (4),
- eine Erfassungseinheit (3, 3a) zur Erfassung von Anwendergesten,
- eine linien- oder kurvenförmig erstreckte Fingerleiste, welche zur haptischen Führung eines Fingers des Anwenders eingerichtet ist und welche zwischen der ersten und zweiten Anzeigeeinrichtung (4, 4a) angeordnet ist, und
- eine Auswerteeinheit (4), wobei
- die erste Anzeigeeinrichtung (4a) eingerichtet ist, einen ersten einem ersten Anzeigeinhalt (13) zugeordneten Bereich (12a) anzuzeigen,
- die zweite Anzeigeeinrichtung (4) eingerichtet ist, einen zweiten Anzeigeinhalt (14) anzuzeigen,
- die zweite Anzeigeeinrichtung (4) eingerichtet ist, einen zweiten einem ersten Anzeigeinhalt (13) zugeordneten Bereich (12b) anzuzeigen, wodurch sich ein übergreifend angezeigter erster Anzeigeinhalt ergibt,
- die Erfassungseinheit (3, 3a) eingerichtet ist, eine vordefinierte Anwendereingabe bezüglich des zweiten, dem ersten Anzeigeinhalt (13) zugeordneten und auf der zweiten Anzeigeeinrichtung (4) dargestellten Bereiches (12b) zu empfangen und die Erfassungseinheit (3, 3a) eingerichtet ist, eine auf der Fingerleiste ausgeführte Bewegung menschlichen Gewebes zu erfassen und in elektrische Signale zu wandeln, **dadurch gekennzeichnet, dass**
- die Auswerteeinheit (4) eingerichtet ist, im Ansprechen auf das Erfassen der vordefinierten Anwendereingabe
- die dem ersten Anzeigeinhalt (13) zugeordnete Fläche auf der zweiten Anzeigeeinrichtung (4) des Fortbewegungsmittels (10) zu erweitern -
- die Auswerteeinheit (4) eingerichtet ist, die elektrischen Signale zu verarbeiten,
- und die Anwenderschnittstelle (1) ferner eingerichtet ist, den zweiten Anzeigeinhalt (14) auf der zweiten Anzeigeeinrichtung (4) in einem dritten, zwischen dem ersten Bereich (12a) und dem zweiten Bereich (12b) angeordneten Bereich (12c) der zweiten Anzeigeeinrichtung (4) zu überlagern und/oder zu ersetzen, wobei der erste, der zweite und der dritte Bereich (12a, 12b, 12c) derart nächstliegend zueinander angeordnet sind, dass keine themenfremden Anzeigeelemente zwischen ihnen angeordnet sind und
- die zweite Anzeigeeinrichtung (4) eingerichtet ist, den zweiten Anzeigeinhalt (14) in übrigen Teilbereichen fortwährend anzuzeigen.

6. Anwenderschnittstelle nach einem der vorstehenden Ansprüche, wobei die erste Anzeigeeinrichtung (4a) und die zweite Anzeigeeinrichtung (4a)
- bezüglich einer ersten Richtung untereinander bzw. nebeneinander angeordnet sind, und
- unterschiedliche Größen und/oder Seitenverhältnisse aufweisen.

7. Anwenderschnittstelle nach Anspruch 5 oder 6, wobei eine Breite der ersten Anzeigeeinrichtung (4a) bezüglich der ersten Richtung (P) kleiner als eine Breite der zweiten Anzeigeeinrichtung (4) bezüglich der ersten Richtung (P) ist, und das Erweitern der dem ersten Anzeigeinhalt (13) zugeordneten Fläche auf der zweiten Anzeigeeinrichtung ausschließlich auf der Breite der ersten Anzeigeeinrichtung (4a) erfolgt.

8. Anwenderschnittstelle nach einem der Ansprüche 5 bis 7, wobei
- eine dem ersten Anzeigeinhalt (13) zugeordnete Fläche auf der ersten Anzeigeeinrichtung (4a) der zweiten Anzeigeeinrichtung (4) nächstliegend und
- eine dem ersten Anzeigeinhalt zugeordnete Fläche auf der zweiten Anzeigeeinrichtung (4) der ersten Anzeigeeinrichtung (4a) nächstliegend angeordnet sind.

9. Anwenderschnittstelle nach einem der Ansprüche 5 bis 8, wobei die vordefinierte Anwendereingabe
- eine Wischgeste in Richtung einer Mitte der zweiten Anzeigeeinrichtung (4), und/oder
- eine Tipp-Geste auf eine Schaltfläche umfasst, welche insbesondere in einem der ersten Anzeigeeinrichtung (4a) nächstliegenden Flächenbereich der zweiten Anzeigeeinrichtung (4) oder in einem der zweiten Anzeigeeinrichtung (4) nächstliegenden Flächenbereich der ersten Anzeigeeinrichtung (4a) dargestellt wird.

10. Computerprogrammprodukt umfassend Instruktionen, welche, wenn Sie auf einer Auswerteeinheit (4) einer Anwenderschnittstelle (1) nach einem der Ansprüche 5 bis 9 ausgeführt werden, die Auswerteeinheit (4) veranlassen, die Schritte eines Verfahrens nach einem der Ansprüche 1 bis 4 durchzuführen.

11. Signalfolge repräsentierend Instruktionen, welche, wenn Sie auf einer Auswerteeinheit (4) einer Anwenderschnittstelle (1) nach einem der Ansprüche 5 bis 9 ausgeführt werden, die Auswerteeinheit (4) veranlassen, die Schritte eines Verfahrens nach einem der Ansprüche 1 bis 4 durchzuführen.

12. Fortbewegungsmittel umfassend eine Anwenderschnittstelle (1) nach einem der Ansprüche 5 bis 9.

## Claims

1. Method for the spanning display of a display content of a user interface (1) of a means of locomotion (10), said user interface (1) comprising:
- a first display device (4a),
- a second display device (4),
- a finger strip which extends in the shape of a line or a curve and which is set up for the tactile guidance of a finger of the user, the finger strip being arranged between the first and second display devices (4, 4a), and
- a detection unit (3, 3a) which is set up to detect a movement of human tissue carried out on the finger strip and to convert it into electrical signals, the method comprising the steps of:
- displaying (100) a first area (12a) associated with a first display content (13) on the first display device (4a) of the means of locomotion (10),
- displaying a second display content (14) on the second display device (4) of the means of locomotion (10),
- displaying a second area (12b) associated with the first display content (13) on the second display device (4), whereby a first display content is displayed in a spanning manner,
- receiving (200) a predefined user input with respect to the second area (12b) associated with the first display content (13) and displayed on the second display device (4), in response thereto
- expanding (300) the area associated with the first display content (13) on the second display device (4) of the means of locomotion (10), wherein the expansion of the area associated with the first display content to the second display device (4) of the means of locomotion (10) comprises:
- overlaying and/or replacing the second display content (14) on the second display device (4) in a third area (12c) of the second display device (4) arranged between the first area (12a) and the second area (12b), the first, the second and the third areas (12a, 12b, 12c) being arranged next to each other such that no display elements unrelated to the subject are arranged between them, and
- continuously displaying the second display content (14) in other sub-areas of the second display device (4).

2. Method according to claim 1, wherein the first display content has an edge which appears visually closed with respect to the second display content (14) on the second display device (4).

3. Method according to claim 1, wherein
- the continuous display of the second display content (14) in other sub-areas of the second display device (4) is effected in a modified visual representation, in particular in a
- blurry representation, and/or
- dimmed representation, and/or
- reduced representation, and/or
- reduced color saturation.

4. Method according to either of claims 2 or 3, further comprising
- receiving (400)
- a swipe gesture in the direction of the first display device (4a), and/or
- a tap gesture onto the second display content (14) on the second display device (4), and
in response thereto
- reducing (500) the area associated with the first display content on the second display device (4) of the means of locomotion (10).

5. User interface (1) for a means of locomotion (10), comprising
- a first display device (4a),
- a second display device (4),
- a detection unit (3, 3a) for detecting user gestures,
- a finger strip which extends in the shape of a line or a curve and which is set up for the tactile guidance of a finger of the user and which is arranged between the first and second display devices (4, 4a), and
- an evaluation unit (4), wherein
- the first display device (4a) is set up to display a first area (12a) associated with a first display content (13),
- the second display device (4) is set up to display a second display content (14),
- the second display device (4) is set up to display a second area (12b) associated with a first display content (13), whereby a first display content is displayed in a spanning manner,
- the detection unit (3, 3a) is set up to receive a predefined user input with respect to the second area (12b) associated with the first display content (13) and displayed on the second display device (4), and the detection unit (3, 3a) is set up to detect a movement of human tissue carried out on the finger strip and to convert it into electrical signals, **characterized in that**
- the evaluation unit (4) is set up
- to expand the area associated with the first display content (13) on the second display device (4) of the means of locomotion (10) in response to the detection of the predefined user input
- the evaluation unit (4) is set up to process the electrical signals,
- and the user interface (1) is furthermore set up to overlay and/or replace the second display content (14) on the second display device (4) in a third area (12c) of the second display device (4) arranged between the first area (12a) and the second area (12b), the first, the second and the third areas (12a, 12b, 12c) being arranged next to one another such that no display elements unrelated to the subject are arranged between them, and
- the second display device (4) is set up to display the second display content (14) continuously in other sub-areas.

6. User interface according to any one of the preceding claims, wherein the first display device (4a) and the second display device (4a)
- are arranged below each other or next to each other with respect to a first direction, and
- have different sizes and/or aspect ratios.

7. User interface according to claim 5 or 6, wherein a width of the first display device (4a) with respect to the first direction (P) is less than a width of the second display device (4) with respect to the first direction (P), and the expansion of the area associated with the first display content (13) on the second display device is effected exclusively on the width of the first display device (4a).

8. User interface according to any one of claims 5 to 7, wherein
- an area on the first display device (4a) which is associated with the first display content (13) is arranged closest to the second display device (4) and
- an area associated with the first display content on the second display device (4) is arranged closest to the first display device (4a).

9. User interface according to any one of claims 5 to 8, wherein the predefined user input comprises
- a swipe gesture towards a center of the second display device (4), and/or
- a tap gesture on a button, which is represented in particular in a surface area of the second display device (4) closest to the first display device (4a) or in a surface area of the first display device (4a) closest to the second display device (4).

10. Computer program product comprising instructions which, when executed in an evaluation unit (4) of a user interface (1) according to any one of claims 5 to 9, cause the evaluation unit (4) to carry out the steps of a method according to any one of claims 1 to 4.

11. Signal sequence representing instructions which, when executed in an evaluation unit (4) of a user interface (1) according to any one of claims 5 to 9, cause the evaluation unit (4) to carry out the steps of a method according to any one of claims 1 to 4.

12. Means of locomotion comprising a user interface (1) according to any one of claims 5 to 9.

## Revendications

1. Procédé d'affichage à recouvrement d'un contenu d'affichage d'une interface utilisateur (1) d'un moyen de déplacement (10), dans lequel l'interface utilisateur (1) comprend :
- un premier dispositif d'affichage (4a),
- un deuxième dispositif d'affichage (4),
- une barre tactile s'étendant en forme de ligne ou de courbe, conçue pour le guidage tactile d'un doigt de l'utilisateur, la barre pour les doigts étant disposée entre les premier et deuxième dispositifs d'affichage (4, 4a) et
- une unité de détection (3, 3a), conçue pour détecter un mouvement de tissu humain réalisé sur la barre tactile et à le convertir en signaux électriques, le procédé comprenant les étapes :
- d'affichage (100) d'une première zone (12a) associée à un premier contenu d'affichage (13) sur le premier dispositif d'affichage (4a) du moyen de déplacement (10),
- d'affichage d'un deuxième contenu d'affichage (14) sur le deuxième dispositif d'affichage (4) du moyen de déplacement (10),
- d'affichage d'une deuxième zone (12b) associée au premier contenu d'affichage (13) sur le deuxième dispositif d'affichage (4), moyennant quoi un premier contenu d'affichage affiché à recouvrement est obtenu,
- de réception (200) d'une entrée utilisateur prédéfinie concernant la deuxième zone (12b) associée au premier contenu d'affichage (13) et représentée sur le deuxième dispositif d'affichage (4), en réponse à ceci
- d'élargissement (300) de la surface associée au premier contenu d'affichage (13) sur le deuxième dispositif d'affichage (4) du moyen de déplacement (10), l'élargissement de la surface associée au premier contenu d'affichage sur le deuxième dispositif d'affichage (4) du moyen de déplacement (10) comprenant :
- la superposition et/ou le remplacement du deuxième contenu d'affichage (14) sur le deuxième dispositif d'affichage (4) dans une troisième zone (12c) disposée entre la première zone (12a) et la deuxième zone (12b) du deuxième dispositif d'affichage (4), la première, la deuxième et la troisième zone (12a, 12b, 12c) étant disposées proches les unes des autres, de sorte qu'aucun élément d'affichage thématiquement éloigné ne puisse être disposé entre elles et
- l'affichage continu du deuxième contenu d'affichage (14) dans d'autres zones partielles du deuxième dispositif d'affichage (4).

2. Procédé selon la revendication 1, dans lequel le premier contenu d'affichage présente un bord semblant visuellement fermé par rapport au deuxième contenu d'affichage (14) sur le deuxième dispositif d'affichage (4).

3. Procédé selon la revendication 1, dans lequel
- l'affichage continu du deuxième contenu d'affichage (14) dans d'autres zones partielles du deuxième dispositif d'affichage (4) est effectué dans une représentation optique modifiée, en particulier dans une
- représentation floue et/ou
- une représentation obscurcie et/ou
- une représentation réduite et/ou
- une saturation des couleurs amoindrie.

4. Procédé selon l'une quelconque des revendications 2 ou 3, comprenant en outre
- la réception (400)
- d'un geste d'effleurement en direction du premier dispositif d'affichage (4a) et/ou
- d'un geste d'appui sur le deuxième contenu d'affichage (14) sur le deuxième dispositif d'affichage (4) et
en réponse
- la réduction (500) de la surface associée au premier contenu d'affichage sur le deuxième dispositif d'affichage (4) du moyen de déplacement (10).

5. Interface utilisateur (1) pour un moyen de déplacement (10) comprenant
- un premier dispositif d'affichage (4a),
- un deuxième dispositif d'affichage (4),
- une unité de détection (3, 3a) pour détecter des gestes de l'utilisateur,
- une barre tactile s'étendant en forme de ligne ou de courbe, conçue pour le guidage tactile d'un doigt de l'utilisateur et disposée entre les premier et deuxième dispositifs d'affichage (4, 4a) et
- une unité de traitement (4),
- le premier dispositif d'affichage (4a) étant conçu pour afficher une première zone (12a) associée à un premier contenu d'affichage (13),
- le deuxième dispositif d'affichage (4) étant conçu pour afficher un deuxième contenu d'affichage (14),
- le deuxième dispositif d'affichage (4) étant conçu pour afficher une deuxième zone (12b) associée à un premier contenu d'affichage (13), moyennant quoi un premier contenu d'affichage affiché à recouvrement est obtenu,
- l'unité de détection (3, 3a) étant conçue pour recevoir une entrée utilisateur prédéfinie concernant la deuxième zone (12b) associée au premier contenu d'affichage (13) et représentée sur le deuxième dispositif d'affichage (4) et l'unité de détection (3, 3a) étant conçue pour détecter un mouvement de tissu humain réalisé sur la barre tactile et pour le convertir en signaux électriques, **caractérisée en ce que**
- l'unité de traitement (4) est conçue pour, en réponse à la détection de l'entrée utilisateur prédéfinie,
- élargir la surface attribuée au premier contenu d'affichage (13) sur le deuxième dispositif d'affichage (4) du moyen de déplacement (10)
- l'unité de traitement (4) est conçue pour traiter les signaux électriques,
- et l'interface utilisateur (1) est en outre conçue pour superposer et/ou remplacer le deuxième contenu d'affichage (14) sur le deuxième dispositif d'affichage (4) dans une troisième zone (12c) disposée entre la première zone (12a) et la deuxième zone (12b) du deuxième dispositif d'affichage (4), la première, la deuxième et la troisième zone (12a, 12b, 12c) étant disposées proches les unes des autres de sorte qu'aucun élément d'affichage thématiquement éloigné ne puisse être disposé entre elles et
- le deuxième dispositif d'affichage (4) étant conçu pour afficher en continu le deuxième contenu d'affichage (14) dans d'autres zones partielles.

6. Interface utilisateur selon l'une quelconque des revendications précédentes, dans laquelle le premier dispositif d'affichage (4a) et le deuxième dispositif d'affichage (4a)
- sont disposés, dans une première direction, l'un sous l'autre ou l'un à côté de l'autre et
- présentent différentes tailles et/ou différents rapports d'aspect.

7. Interface utilisateur selon la revendication 5 ou 6, dans laquelle une largeur du premier dispositif d'affichage (4a) par rapport à la première direction (P) est inférieure à une largeur du deuxième dispositif d'affichage (4) par rapport à la première direction (P) et l'élargissement de la surface associée au premier contenu d'affichage (13) sur le deuxième dispositif d'affichage est effectué uniquement sur la largeur du premier dispositif d'affichage (4a).

8. Interface utilisateur selon l'une quelconque des revendications 5 à 7, dans laquelle
- une surface associée au premier contenu d'affichage (13) sur le premier dispositif d'affichage (4a) est disposée le plus proche du deuxième dispositif d'affichage (4) et
- une surface associée au premier contenu d'affichage sur le deuxième dispositif d'affichage (4) est disposée le plus proche du premier dispositif d'affichage (4a).

9. Interface utilisateur selon l'une quelconque des revendications 5 à 8, dans laquelle l'entrée utilisateur prédéfinie comprend
- un geste d'effleurement en direction d'un centre du deuxième dispositif d'affichage (4) et/ou
- un geste d'appui sur un bouton, qui est représenté en particulier dans une zone de surface du deuxième dispositif d'affichage (4) la plus proche du premier dispositif d'affichage (4a) ou dans une zone de surface du premier dispositif d'affichage (4a) la plus proche du deuxième dispositif d'affichage (4).

10. Produit programme informatique comprenant des instructions qui, lorsqu'elles sont exécutées sur une unité de traitement (4) d'une interface utilisateur (1) selon l'une quelconque des revendications 5 à 9, amènent l'unité de traitement (4) à effectuer les étapes d'un procédé selon l'une quelconque des revendications 1 à 4.

11. Séquence de signal représentant des instructions qui, lorsqu'elles sont exécutées sur une unité de traitement (4) d'une interface utilisateur (1) selon l'une quelconque des revendications 5 à 9, amènent l'unité de traitement (4) à effectuer les étapes d'un procédé selon l'une quelconque des revendications 1 à 4.

12. Moyen de déplacement comprenant une interface utilisateur (1) selon l'une quelconque des revendications 5 à 9.
